(19)

Europäisches
Patentamt

European
Patent Office

Office européen
des brevets

(11)  **EP 4 492 664 A1**

(12)  **EUROPEAN PATENT APPLICATION**

(43) Date of publication:
  **15.01.2025   Bulletin 2025/03**

(21) Application number: **24165932.5**

(22) Date of filing: **25.03.2024**

(51) International Patent Classification (IPC):
  **H02M 1/32** *(2007.01)*      **H02M 7/5387** *(2007.01)*

(52) Cooperative Patent Classification (CPC):
  **H02M 1/322; H02M 7/5387**

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **GE KH MA MD TN**

(30) Priority:  **11.07.2023   US 202363526133 P
  16.02.2024   US 202418444201**

(71) Applicant: **Analog Devices International
  Unlimited Company
  Limerick (IE)**

(72) Inventors:
  • **MARTINI, Luca
  Co. Limerick (IE)**
  • **BROECKELMANN, Uwe
  Co. Limerick (IE)**

(74) Representative: **Horler, Philip John
  Withers & Rogers LLP
  2 London Bridge
  London SE1 9RA (GB)**

(54)  **CAPACITOR DISCHARGE**

(57)    There is provided an inverter system comprising a DC input for connecting to a DC power source. The inverter system comprises a plurality of transistors that are controllable to convert a DC voltage to an AC voltage. The inverter system further comprises a DC link capacitor coupled to the DC input of the inverter system and a discharge controller configured to cause a discharge of energy from the DC link capacitor when the DC power source is disconnected from the DC input of the inverter system. The discharge controller is configured to cause the discharge of energy from the DC link capacitor by turning on at least a first transistor and a second transistor so as to cause a controlled shoot-through of the inverter system. At least one of the fist transistor and the second transistor are controlled by the discharge controller to operate in a linear region of operation.

**FIG. 2**

**EP 4 492 664 A1**

## Description

## Technical Field

The disclosure herein relates to discharging of energy from a DC link capacitor. More specifically, the disclosure herein relates to discharging of energy from a DC link capacitor coupled to a DC input of an inverter when a DC power source is disconnected from the DC input.

## Background

The recent boom in electric vehicle (EV) adoption and the push for electrification of various industrial machinery have brought forth several critical safety requirements. Among these requirements, the safety regulations imposed on automotive systems demand the rapid discharge of capacitors in an EV traction inverter, notably the DC link capacitor, immediately after the ignition is switched off.

The safety discharge requirement applies to all electrically powered vehicles that are allowed to operate on public roads such as Hybrid Electric Vehicles (HEV), Plug-in Electric Vehicles (PEV), Battery Electric Vehicles (BEV), and Full Electric Vehicles (FEV).

Traditional methods addressing this safety discharge requirement have mainly revolved around the usage of high power, bulky, and expensive discharge resistors. These resistors, driven by a power transistor, are employed to modulate and dissipate the stored energy in the DC link capacitor to meet the safety discharge requirement.

While some of the traditional methods have been effective to a certain extent, they are not without challenges. The primary problem lies in the need for additional components like the discharge resistor. These components not only add to the system's overall cost but also contribute to the bulkiness of the setup. Furthermore, the reliance on these components to rapidly discharge the DC link capacitor presents an inefficiency in the design. There is, therefore, an imminent need for an improved solution that is more streamlined, efficient, and cost-effective while adhering to the safety standards set by the automotive safety regulations.

## Summary

According to a first aspect of the present disclosure, there is provided a system comprising an inverter comprising a DC input for connecting to a DC power source. The inverter comprises a plurality of transistors that are controllable to convert a DC voltage to an AC voltage. The system further comprises a DC link capacitor coupled to the DC input of the inverter and a discharge controller configured to cause a discharge of energy from the DC link capacitor when the DC power source is disconnected from the DC input of the traction inverter. The discharge controller is configured to cause the discharge of energy from the DC link capacitor by turning on at least a first transistor and a second transistor of the inverter so as to cause a controlled shoot-through of the inverter. At least one of the fist transistor and the second transistor are controlled by the discharge controller to operate in a linear region of operation.

Optionally, the discharge controller further comprises a first servo loop circuit for controlling a first voltage across the first transistor.

Optionally, the first servo loop circuit further comprises: a first voltage measurement circuit configured to measure the first voltage across the first transistor, and wherein the first servo loop circuit is configured to set a first control signal for the first transistor based on the measured first voltage and a first reference trajectory voltage such that the first voltage across the first transistor follows the reference trajectory voltage.

Optionally, the first reference trajectory voltage is set based on a target discharge profile of the DC link capacitor.

Optionally, the first reference trajectory voltage is further based on a first temperature measurement associated with the first transistor.

Optionally, the system further comprising: a second servo loop circuit for controlling a second voltage across the second transistor.

Optionally, the second servo loop circuit further comprises: a second voltage measurement circuit configured to measure the second voltage across the second transistor, and wherein the second servo loop circuit is configured to set a second control signal for the second transistor based on the measured second voltage and a second reference trajectory voltage such that the second voltage across the second transistor follows the reference trajectory voltage.

Optionally, the second reference trajectory voltage is set based on the target discharge profile of the DC link capacitor.

Optionally, the second reference trajectory voltage is further based on the second temperature measurement associated with the second transistor.

Optionally, the discharge controller is configured to set a second control signal for the second transistor to turn the second transistor fully on.

Optionally, the discharge controller is further configured to cause the discharge of energy from the DC link capacitor by turning on at least a third transistor and a fourth transistor of the inverter so as to cause a controlled shoot-through of a first leg of the inverter formed by the first transistor and the second transistor, and a second leg of the inverter formed by the third transistor and the fourth transistor, wherein at least one of the third transistor and the fourth transistor are controlled by the discharge controller to operate in a linear region of operation.

Optionally, the discharge controller is configured to discharge energy from the DC link capacitor to a predetermined capacitor voltage within a predetermined time period.

Optionally, each of the first transistor and second transistor are any one of: a Silicon MOSFET, an SiC MOSFET, a GaN MOSFET, or an IGBT.

Optionally, the first servo loop circuit is a first digital servo loop circuit.

Optionally, the first reference trajectory voltage is stored in a look up table in memory.

Optionally, the first servo loop circuit is a first analog servo loop circuit.

Optionally, the system further comprising a first analog reference generator configured to generate the first reference trajectory voltage as an analog voltage signal.

According to a second aspect of the present disclosure, there is provided an Electric Vehicle comprising an inverter system. The inverter system comprises: an inverter comprising a DC input for connecting to a DC power source, wherein the inverter comprises a plurality of transistors that are controllable to convert a DC voltage to an AC voltage; a DC link capacitor coupled to the DC input of the inverter; and a discharge controller configured to cause a discharge of energy from the DC link capacitor when the DC power source is disconnected from the DC input of the inverter. The discharge controller is configured to cause the discharge of energy from the DC link capacitor by turning on at least a first transistor and a second transistor of the inverter so as to cause a controlled shoot-through of the inverter. At least one of the fist transistor and the second transistor are controlled by the discharge controller to operate in a linear region of operation.

According to a third aspect of the present disclosure, there is provided a method for discharging energy from a DC link capacitor in an inverter system comprising an inverter with a plurality of transistors that are controllable to convert a DC voltage to an AC voltage, the method comprising discharging the DC link capacitor by: turning on at least a first transistor and a second transistor of the inverter to induce a controlled shoot-through so as to cause energy discharge from the DC link capacitor, at least one of the first transistor and the second transistor are controlled to operate in a linear region of operation.

Optionally, the method further comprises controlling a first voltage across the first transistor using a first servo loop circuitry.

Optionally, the method furth comprises: measuring the first voltage across the first transistor, and setting a first control signal for the first transistor based on the measured first voltage and a first reference trajectory voltage such that the first voltage across the first transistor follows the reference trajectory voltage.

Optionally, the first reference trajectory voltage is set based on a target discharge profile of the DC link capacitor.

Optionally, the first reference trajectory voltage is further based on a first temperature measurement associated with the first transistor.

Optionally, the method further comprises controlling a second voltage across the second transistor using a second servo loop circuit.

Optionally, the method further comprises: measuring the second voltage across the second transistor, and setting a second control signal for the second transistor based on the measured second voltage and a second reference trajectory voltage such that the second voltage across the second transistor follows the reference trajectory voltage.

Optionally, the second reference trajectory voltage is set based on the target discharge profile of the DC link capacitor.

Optionally, the second reference trajectory voltage is further based on the second temperature measurement associated with the second transistor.

Optionally, the method further comprises setting a second control signal for the second transistor to turn the second transistor fully on.

Optionally, the method comprises: discharging of energy from the DC link capacitor by turning on at least a third transistor and a fourth transistor of the traction inverter so as to cause a controlled shoot-through of a first leg of the PWM inverter formed by the first transistor and the second transistor, and a second leg of the PWM inverter formed by the third transistor and the fourth transistor, wherein at least one of the third transistor and the fourth transistor are controlled by the discharge controller to operate in a linear region of operation.

Optionally, the method further comprises adjusting a corresponding control signal to each of the at least first transistor and second transistor so as to cause a corresponding voltage across the at least first transistor and second transistor to follow a corresponding reference trajectory voltage.

Optionally, the method further comprises setting the corresponding reference trajectory voltage based on a target discharge profile of the DC link capacitor.

Optionally, the method further comprises setting the corresponding reference trajectory voltage for each of the at least first transistor and second transistor based on a corresponding temperature of the at least first transistor and second transistor.

Optionally, the method further comprises setting the corresponding reference trajectory voltage for each of the at least first transistor and second transistor to be the same voltage.

Optionally, the method further comprises setting the corresponding reference trajectory voltage one of the at least first transistor or second transistor to zero.

Optionally, the method further comprises setting the reference trajectory voltage based on an analog signal received at the inverter system.

Optionally, the method further comprises setting the reference trajectory voltage based on a look-up table stored in a memory of a gate driver of the inverter system.

Optionally, the method further comprises discharging the DC link capacitor through multiple legs of the PWM inverter simultaneously.

**Brief Description of the Drawings**

The invention shall now be described, by way of example only, with reference to the accompanying drawings in which:

FIG. 1 illustrates a traditional DC link discharge system;

FIG. 2 illustrates a DC link discharge system in accordance with an aspect of the invention;

FIG. 3 shows some example details of the discharge controller 220 of FIG. 2;

FIG. 4 shows the DC link capacitor voltage during active discharge using the inverter system of FIG. 2;

FIG. 5 shows the measured voltage of both power transistors 122 and 123 during a first example active discharge of the DC link capacitor voltage using the inverter system of FIG. 2;

FIG. 6 shows the gate drive voltage of both power transistors 122 and 123 during the first example active discharge of the DC link capacitor voltage using the inverter system of FIG. 2;

FIG. 7 shows the reference trajectory voltage used by controllers 233 and 243 to control the gate voltage of both power transistors 122 and 123 during the first example active discharge of the DC link capacitor voltage using the inverter system of FIG. 2;

FIG. 8 shows the controlled shoot through current of both power transistors 122 and 123 during the first example active discharge of the DC link capacitor voltage using the inverter system of FIG. 2;

FIG. 9 shows the power in both power transistors 122 and 123 during the first example active discharge of the DC link capacitor voltage using the inverter system of FIG. 2;

FIG. 10 shows the energy loss in both power transistors 122 and 123 during the first example active discharge of the DC link capacitor voltage using the inverter system of FIG. 2;

FIG. 11 shows the DC link capacitor voltage during a second example active discharge using the inverter system of FIG. 2 with balanced power dissipation;

FIG. 12 shows the measured voltage of both power transistors 122 and 123 during the second example active discharge of the DC link capacitor voltage using the inverter system of FIG. 2 with balanced power dissipation;

FIG. 13 shows the gate drive voltage of both power transistors 122 and 123 during the second example active discharge of the DC link capacitor voltage using the inverter system of FIG. 2 with balanced power dissipation;

FIG. 14 shows the reference trajectory voltage used by controllers 233 and 243 to control the gate voltage of both power transistors 122 and 123 during the second example active discharge of the DC link capacitor voltage using the inverter system of FIG. 2 with balanced power dissipation;

FIG. 15 shows the controlled shoot through current of both power transistors 122 and 123 during the second example active discharge of the DC link capacitor voltage using the inverter system of FIG. 2 with arbitrary discharge profile;

FIG. 16 shows the power in both power transistors 122 and 123 during the second example active discharge of the DC link capacitor voltage using the inverter system of FIG. 2 with arbitrary discharge profile;

FIG. 17 shows the energy loss in both power transistors 122 and 123 during the second example active discharge of the DC link capacitor voltage using the inverter system of FIG. 2 with arbitrary discharge profile;

FIG. 18 shows the DC link capacitor voltage during a third example active discharge using the inverter system of FIG. 2 with arbitrary discharge profile;

FIG. 19 shows the measured voltage of both power transistors 122 and 123 during the third example active discharge of the DC link capacitor voltage using the inverter system of FIG. 2 with unbalanced power dissipation;

FIG. 20 shows the gate drive voltage of both power transistors 122 and 123 during the third example active discharge of the DC link capacitor voltage using the inverter system of FIG. 2 with unbalanced power dissipation;

FIG. 21 shows the reference trajectory voltage used by controllers 233 and 243 to control the gate voltage of both power transistors 122 and 123 during the third example active discharge of the DC link capacitor voltage using the inverter system of FIG. 2 with unbalanced power dissipation;

FIG. 22 shows the controlled shoot through current of both power transistors 122 and 123 during the third example active discharge of the DC link capacitor voltage using the inverter system of FIG. 2 with unbalanced power dissipation;

FIG. 23 shows the power in both power transistors 122 and 123 during the third example active discharge of the DC link capacitor voltage using the inverter system of FIG. 2 with unbalanced power dissipation; and

FIG. 24 shows the energy loss in both power transistors 122 and 123 during the third example active discharge of the DC link capacitor voltage using the inverter system of FIG. 2 with unbalanced power dissipation;

FIG. 25 illustrates a detailed view of digital discharge controller in accordance with an aspect of the disclosure;

FIG. 26 shows the use of a potential divider with the digital discharge controller from FIG. 25;

FIG. 27 illustrates a detailed view of a discharge controller in accordance with another aspect of the disclosure;

FIG. 28 illustrates a detailed view of an analog discharge controller in accordance with another aspect of the disclosure;

FIG. 29 shows a vehicle that includes the DC link discharge system of FIG .2;

FIG. 30 shows a flow diagram illustrating a method for discharging energy from a DC link capacitor in an inverter system according to another aspect of the disclosure; and

FIG. 31 shows an alternative discharge controller to that of FIG. 3.

**Detailed Description**

The automotive safety regulations often require a discharge the DC link capacitor, and other capacitors, in an EV traction inverter to a defined potential, for example 60V, within a defined amount of time of the ignition being switched off, for example within two to five seconds. The urgency and precision required in this operation arise from the inherent safety risks posed by the stored energy, which can be quantified as:

$$E = \frac{1}{2} C (V_{bus} - V_{safe})^2$$

For instance, a 1mF Capacitor charged at 850V holds energy equivalent to 312.05 J, which can be hazardous if not managed appropriately.

In an attempt to adhere to these requirements, in the past typically a power transistor-controlled discharge resistor has been used. In these arrangements, a power transistor controls the flow of current from the capacitor to the discharge resistor, so that when required current can flow from the capacitor to the resistor so that the capacitor stored energy is dissipated by the discharge resistor. In these arrangements, several control techniques have been adopted, such as:
Single Pulse Discharge. Here, the power transistor remains constantly ON when capacitor discharge is desired (for example, immediately after the ignition is switched off), causing the discharge resistor to dissipate a large amount of energy, especially during the initial phase of the discharge.

Constant Power Discharge. This approach uses a discharge Pulse-Width Modulation (PWM) controller. The controller administers a sequence of pulses to the gate of the power transistor so that current is discharged to the discharge resistor in pulses. This sequence may be designed to maintain a consistent power dissipation rate by the discharge resistor.

Arbitrary Power Profile Discharge. In this method, a discharge PWM controller is employed to deliver a pulse sequence to the gate of the power transistor so that current is discharged to the discharge resistor in pulses. The sequence may be calibrated so that the power dissipated by the discharge resistor follows a predetermined profile.

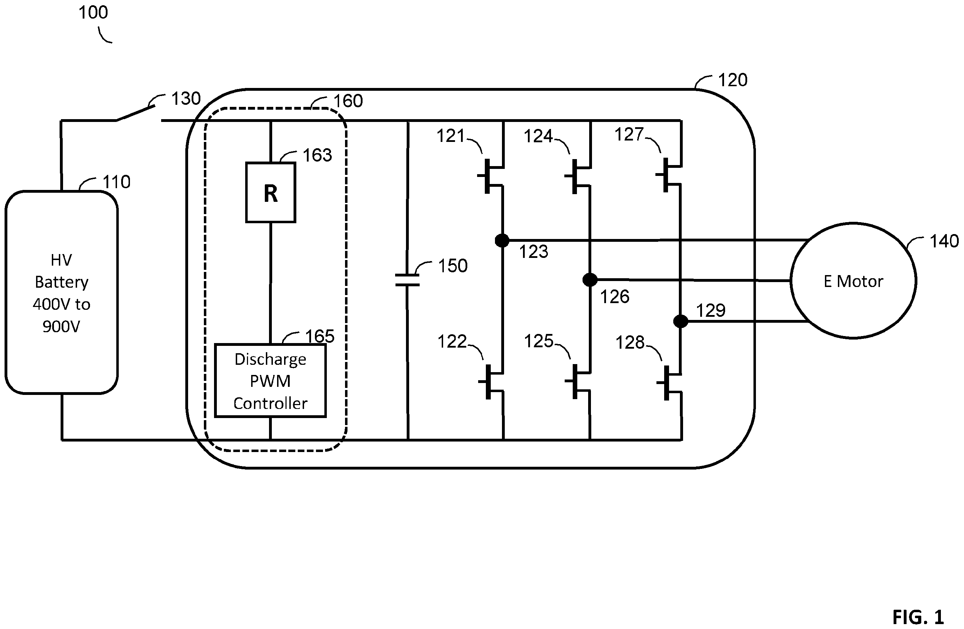

FIG. 1 illustrates a traditional DC link discharge system 100. The tradition DC link discharge system comprises a high voltage (HV) battery 110 which in this example provides 400V to 900V DC to the vehicle traction inverter 120. The HV battery 110 is connected to the vehicle traction inverter 120 via battery switch 130. The vehicle traction inverter 120 converts the DC power from the HV battery 110 to AC power for the electric motor 140 of an electric vehicle (EV).

In this example, the vehicle traction inverter 120 is a three-phase inverter that outputs three phases of AC voltages. As such, it comprises three legs of power transistors, wherein a first leg comprises power transistors 121 and 122 in series that may be controlled to output a first phase AC voltage 123, a second leg comprises power transistors 124 and 125 in series that may be controlled to output a second phase AC voltage 126, and a third leg comprises power transistors 127 and 128 in series that may be controlled to output a third phase AC voltage 129. The power transistors 122, 123, 125, 126, 128 and 129 primarily act as switches, enabling the rapid conversion of direct current from the HV battery 110 into three phases of alternating current for the three-phase electric motor 140, for example by controlling the state of the power transistor (e.g., turning them on and off, using pulse-width modulation, PWM). It will be appreciated that in an alternative, the inverter 120 may be configured to generate any number of AC phases, for example one, two, four, etc, and comprise a corresponding number of legs of power transistors. Whilst not represented in FIG. 1, the system 100 may also comprise a controller configured to control the power transistors so as to achieve the desired AC signals at the AC output of the inverter 120.

The vehicle traction inverter 120 also comprises a DC link capacitor 150 which serves to smooth and stabilise the DC voltage supplied to the vehicle traction inverter 120. The DC link capacitor 150 provides a means for absorbing voltage spikes and providing supplemental power during transient conditions, ensuring consistent and efficient conversion of DC to AC for driving the electric motor 140.

The vehicle traction inverter 120 also comprises a traditional discharge system 160 for discharging stored energy in the DC link capacitor 150 when the ignition of the EV is off. The traditional discharge system 160 comprises a discharge resistor 163 and a discharge PWM controller 165. The discharge resistor 163 serves to facilitate the dissipation of stored energy in the DC link capacitor 150. The discharge PWM controller 165 regulates the discharge process by controlling the operation of the power transistors to control the power dissipated by the discharge resistor 163.

However, as outlined above in the background section, the traditional DC link discharge systems requires the incorporation of additional components such as the discharge resistor and the PWM discharge controller. This can add to the weight and bulk of the system, making it less compact and potentially affecting vehicle efficiency. Furthermore, multiple components, each with their failure modes, can decrease overall system reliability. For instance, resistors can degrade over time, affecting their resistance value and thereby altering discharge times, or potentially failing altogether. Additionally, the traditional discharge system, with its separate discharge resistor and PWM controller, introduces additional complexity in system design, installation, and troubleshooting.

The present disclosure provides a novel inverter system that addresses automotive safety regulations with regards to the discharge of the DC link capacitor and address many of the disadvantages of traditional systems. The novel inverter system is equipped with a discharge controller, which, when the DC power source is disconnected, activates a controlled shoot-through of the inverter by turning on at least one of a first and a second transistor. Notably, at least one of these transistors operates in a linear region of operation, managed by the discharge controller.

The solution disclosed herein may eliminate the need for additional components such as the bulky discharge resistor which may not only reduce the overall weight and size of the system but also decrease associated costs of the system. Furthermore, by leveraging components already present in the traction inverter for the discharge operation, the system may enhance energy efficiency and improve response times. Therefore, the design put forth in this disclosure may offer a streamlined, efficient, and cost-effective solution that aptly meets the automotive safety regulations while offering superior performance.

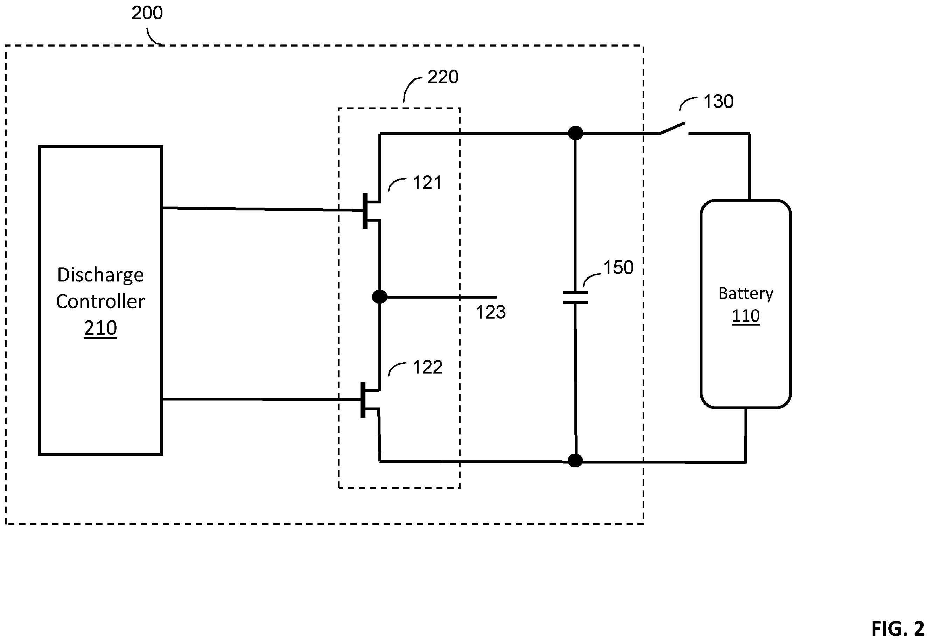

FIG. 2 illustrates an inverter system 200 (for example a PWM inverter system) in accordance with an aspect of the invention. The system 200 comprises a discharge controller 210 for controlling the first transistor 121 and the second transistor 122 when discharge of the capacitor 105 is desired. The first transistor 121 and second transistor 122 are part of a switch circuit 220 (which may also be referred to as a switch network 220), and together formed one inverter leg of the inverter system 200 , and during normal inverter operation they may be controlled by a controller (not represented in Figure 2) to convert the DC voltage supplied by the battery 110 into an AC voltage 123. The switch circuit 220 may comprise any number of transistors forming any number of inverter legs in order to generate any number of phases of AC voltage (for example, three inverter legs formed by six transistors in order to generate three phases of AC voltage in the same way as represented in FIG. 1), but just one inverter leg is represented in FIG. 2 for the sake of simplicity.

As explained earlier with reference to FIG. 1, the DC link capacitor 150 is coupled to the DC input of the inverter system 200. The discharge controller 210 is configured to control transistors 121 and 122 to cause a discharge of energy from the DC link capacitor 150 when the DC power source, in this example the battery 110, is disconnected from the DC input of the inverter system 200 (for example, by opening switch 130). The discharge controller 210 achieves this turning on the first transistor 121 and second transistor 122 so as to cause a controlled shoot-through of the inverter system 200 (for example, a short circuit through the inverter leg that comprises the first transistor 121 and second transistor 122 so that charge from the capacitor 150 may discharge through the first transistor 121 and second transistor 122). The discharge controller 210 controls the first transistor 121 and second transistor 122 such that at least one of them are turned on and operate in their linear region of operation, which is the region where the transistor shows resistance to channel current (for example, drain current, or collector current) and behaves similarly to a linear resistor. In this region, the channel current is proportional, or substantially proportional, to the applied control signal (for example, gate voltage or base current). This region is also sometimes referred to as the ohmic region of operation. In one example, the first transistor 121 may be turned fully on (for example, to operate in the saturation region) and the second transistor 122 may be turned on to operate in the linear region. In this case, the second transistor 122 may dissipate all, or substantially all, of the energy discharged by the capacitor 150. In another example, the second transistor 122 may be turned fully on (for example, to operate in the saturation region) and the first transistor 121 may be turned on to operate in the linear region. In this case, the first transistor 121 may dissipate all, or substantially all, of the energy discharged by the capacitor 150. In a further example, both the first transistor 121 and second transistor 122 may be turned on to operate in the linear region, in which case they may each dissipate a portion of the energy discharged by the capacitor 150.

The discharge controller 210 may become aware that the DC power source has been disconnected from the DC input to the inverter system 200 in any suitable way. For example, it may be configured to receive a discharge request from another unit or controller, such as one that is monitoring or controlling the status of switch 130, or that is controlling or monitoring any other component or measurement that is indicative of whether or not the DC power source is connected to the inverter system 200. Such a discharge request signal is not represented in FIG. 2 for the sake of simplicity.

Consequently, it can be seen that by implementing a discharge controller 210, it is possible to execute a controlled discharge of the DC link capacitor 150 when needed, without requiring an additional discharge resistor and transistor, such as that represented in the discharge system 160 of FIG. 1.

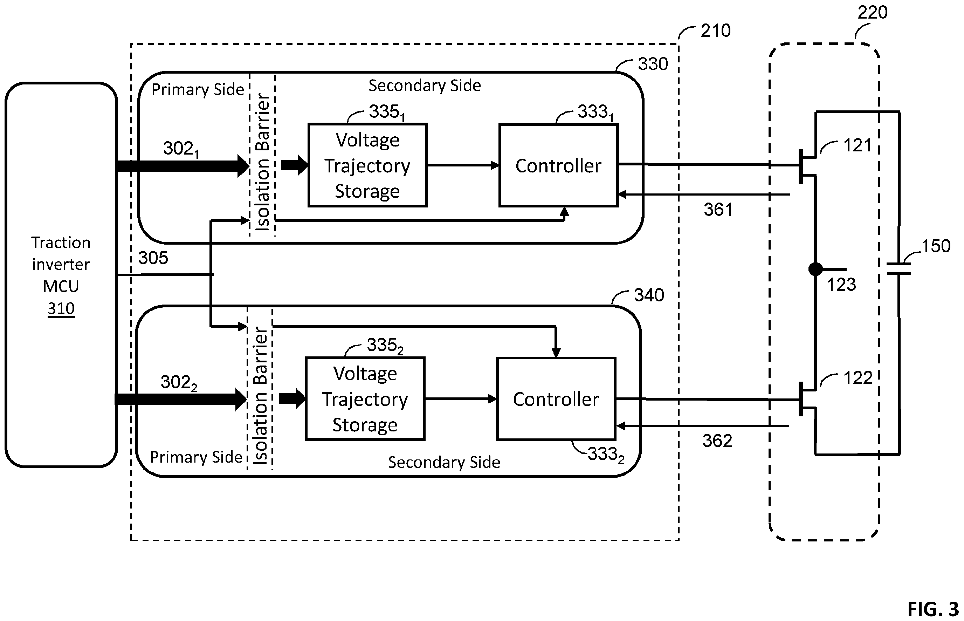

FIG. 3 shows some example details of the discharge controller 210. In this example, the discharge controller 210 comprises a first gate driver 330 for controlling the first transistor 121 and a second gate driver 340 for controlling the second transistor 122.

In this example, the first gate driver 330 is suitable for coupling to a traction inverter microcontroller unit, MCU, 310 which may perform some functionality relating to the control of discharge of the DC link capacitor 150 by the isolated gate drivers 330. In this example, as explained in more detail later, the traction inverter MCU 310 may supply data indicative of a first desired voltage trajectory $302_1$ to the first gate driver 330 and issues a discharge request signal 305 to the first and second gate drivers 330 and 340 when capacitor discharge is required (for example, when the vehicle ignition is turned off). However, in an alternative, the first gate driver 330 may be provisioned with data indicative of the first desired voltage trajectory in any other suitable way and/or capacitor discharge may be initiated in any other suitable way (for example, by a discharge request signal issued from any suitable device/unit on the primary and/or second side of the isolation barrier).

The first gate driver 330 in this example is divided by an isolation barrier, segregating its primary side (located to the left) from its secondary side (positioned to the right). This is because the traction inventor MCU 310 in this example is a relatively low voltage digital unit and most of the inverter system 200 is relatively high voltage, such that domain isolation is require for safety reasons. However, it will be appreciated that the isolation barrier is optional depending on the relative voltage levels of each domain. The first gate driver 330 comprises a controller $333_1$ and a voltage trajectory storage $335_1$, such as a memory unit, that stores the received data $302_1$. In an alternative, voltage trajectory storage $335_1$ may not be part of the first gate driver 330, but may be located elsewhere, for example as a single storage that is accessible to both the first and second gate drivers 330 and 340. In one example, it may form part of a general storage or memory unit that is accessible to the controller $333_1$ (and controller $333_2$), as well as one or more other, unrelated units/modules. The controller $333_1$ receives a first voltage measurement 361 indicative of a voltage across the channel terminals of the first transistor 121 (for example, the drain-source voltage, or the collector-emitter voltage, of the first transistor 121) and compares the first voltage measurement 361 with a reference voltage obtained from the first voltage trajectory storage $335_1$. Based on this comparison, it outputs a gate drive signal to the first transistor 121 to control the first transistor 121. In particular, the controller $333_1$ may adjust the gate drive signal, for example increasing it or decreasing it as necessary, so as to reduce any difference between the reference voltage and the voltage across the channel terminals of the first transistor 121 (ideally reducing the difference to zero). In this way, the discharge controller 210 effectively comprises a first servo loop for controlling the voltage across the first transistor 121. Details of how the first voltage measurement 361 may be made, and how the controller $333_1$ may operate are explained later. In a symmetrical fashion, the discharge controller 220 also comprises a second gate driver 340 to control the second power transistor 122. The second gate driver 340 is identical to the first gate driver 340 in that it comprises voltage trajectory storage $335_2$ and a controller $333_2$ that are configured to perform the same functionality. However, rather than receiving data indicative of the first desired voltage trajectory $302_1$, it receives and stores data indicative of a second desired voltage trajectory $302_2$. As explained later, the first desired voltage trajectory and the second desired voltage trajectory may be the same or different. Furthermore, the controller $333_2$ is configured to receive a second voltage measurement 362 indicative of a voltage across the channel terminals of the second transistor 122 (for example, the drain-source voltage, or the collector-emitter voltage, of the first transistor 122) and compares the second voltage measurement 362 with a reference voltage obtained from the second voltage trajectory storage $335_2$. Based on this comparison, it outputs a gate drive signal to the second transistor 122 to control the second transistor 122. In particular, the controller $333_2$ may adjust the gate drive signal, for example increasing it or decreasing it as necessary, so as to reduce any difference between the reference voltage and the voltage across the channel terminals of the first transistor 122 (ideally reducing the difference to zero). In this way, the discharge controller 210 effectively comprises a second servo loop for controlling the voltage across the first transistor 122. Details of how the second voltage measurement 362 may be made, and how the controller $333_2$ may operate are explained later.

In some examples, the first and second gate drivers 330 and 340 can be merged into a singular isolated gate driver unit. This modular structure can then manage the operations of both power transistors, 121 and 122.

The first and second desired reference trajectory voltages may be set based on a target discharge profile of the DC link capacitor 150. Optionally, the first and/or second desired reference trajectory voltages may be based on temperature measurements associated with the power transistors.

The controllers $333_1$ and $333_2$ can be implemented in various configurations, either in the analog domain using analog circuitry or in the digital domain using ADCs (Analog to Digital Converters) and DACs (Digital to Analog Converters). Further details are explained later.

The power transistors 121 and 122 (and any other power transistors in the inventor 220) can be of various types, such as Silicon MOSFETs, SiC MOSFETs, GaN MOSFETs, JFETs, IGBTs, BJTs, or any other type of transistor device may be used. These can be either p-type or n-type based on doping characteristics. Whilst the transistors are typically referred to herein as FETs, it will be appreciated that they may alternatively be BJTs and so the terms gate, source and drain as used herein also encompasses base, emitter and collector. The exact nature of these transistors, particularly their Drain-to-Source (or Collector-to-Emitter for BJTs and IGBTs) Voltage (Vds or Vce), can be controlled through their gate drives, thereby enabling the controlled discharge process.

As explained in more detail later, the voltage trajectory storage $335_1$ and $335_2$, can provide to its respective controller $333_1$ and $333_2$, a reference voltage based on the first and second desired voltage trajectory, which can be time-variant, for example derived from a lookup table storing the data $302_1$ and $302_2$ in the voltage trajectory storage $335_1$ and $335_2$. The first and second desired voltage trajectories can be designed based on various factors such as safety standards, system efficiency, or component longevity. The first and second desired voltage trajectories can be stored or configured on either the primary or secondary side of the gate driver, ensuring flexibility in the system. However, it may be preferable for the reference trajectory voltage to be stored/configured at least on the secondary side (as is the case in FIG. 3) to improve functional safety in case the supply on the primary side is lost.

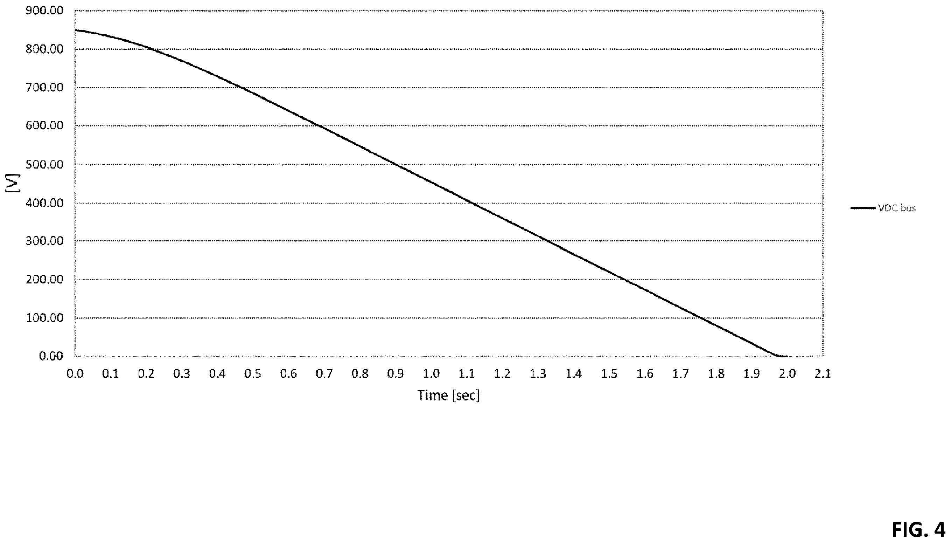

FIGs. 4- 24 show example waveforms when operating the inverter system of FIG. 2 and 3.

In each of these examples, the DC voltage supply to the inverter system 200 (i.e., the voltage supplied by the battery 110) is Vbus=850V and the capacitance of the DC link capacitor 150 is C=1000uF. However, it will be appreciated that this is simply one, non-limiting example and that other values maybe used.

FIGs. 4-10 show an example operation during active discharge of the DC link capacitor 150 where the first and second desired voltage trajectories are the same as each other and where a substantially linear reduction of DC link capacitor voltage from 850V to 0V is desired over a two second period.

FIG. 4 shows the DC link capacitor voltage during active discharge. In this example, there is a balanced power dissipation through both the first and second transistors 121 and 122 and the discharge is substantially linear from 850V to 0V in two seconds. Therefore, in this example, from the moment the discharge request signal 305 is issued to the discharge controller 210, two seconds later the capacitor 150 has been discharged to 0V.

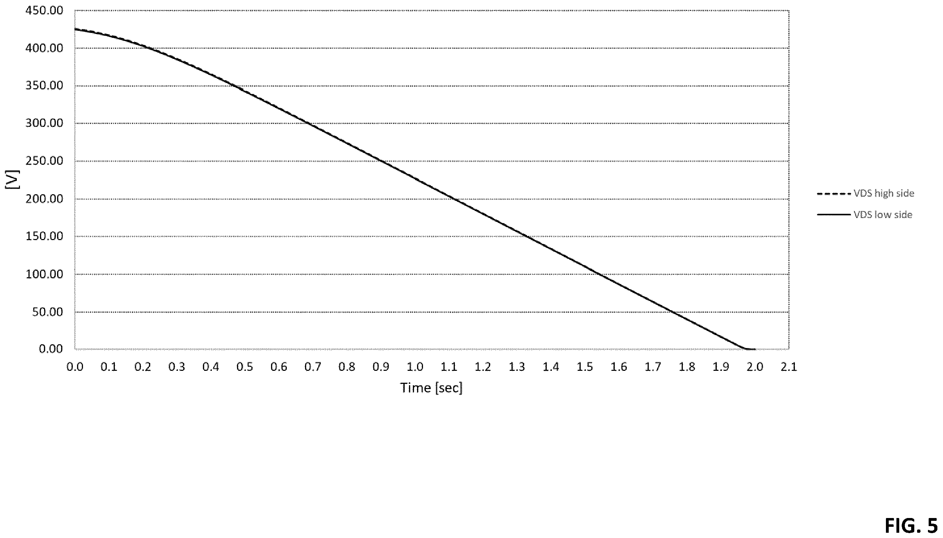

FIG. 5 shows the measured voltage of both power transistors 121 and 122 (i.e., the drain-source voltage of each of the transistors 121 and 122) during the active discharge of the DC link capacitor 150. There is a balanced power dissipation through both power transistors 121 and 122 and the voltage change of both is substantially linear from 425V (i.e., 50% of the DC link capacitor voltage) to 0V over the two seconds. Since the voltage change across each transistor 121 and 122 is the same, their discharge profiles overlap in FIG 5 so only one is visible. It will be appreciated that the profile represented in FIG 5 should be similar to the first and second desired voltage trajectories, since the controllers $333_1$ and $333_2$ are configured to control the transistors 121 and 122 during the two second discharge in such a way that the measured voltages 361 and 362 substantially match the references received from voltage trajectory storage $335_1$ and $335_2$.

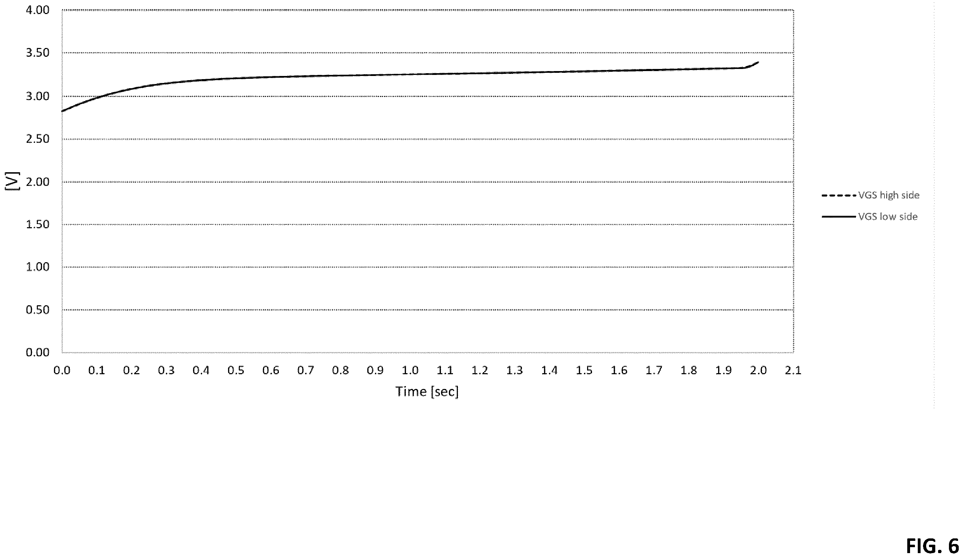

FIG. 6 shows the gate drive voltage output by the controllers $333_1$ and $333_2$ to the power transistors 121 and 122 to control active discharge of the DC link capacitor 150 during the two second discharge period. Since there is a balanced power dissipation through both power transistors 121 and 122 and the circuit in this simulation is ideal/perfect, the gate voltages of both transistors 121 and 122 are the same and therefore overlap in FIG 6. The controller $333_1$ varies the gate voltage of the first transistor 121 periodically/intermittently throughout the discharge period based on a comparison of first measured voltage 361 and the latest reference voltage from the voltage trajectory storage $335_1$, which is the target $V_{DS}$ voltage for the first transistor 121 at that time into the discharge period based on the first desired voltage trajectory. The controller $333_2$ operates in the same way to control the gate voltage of the second transistor 122 based on the second voltage measurement 362 and the reference voltage received from the voltage trajectory

storage $335_2$.

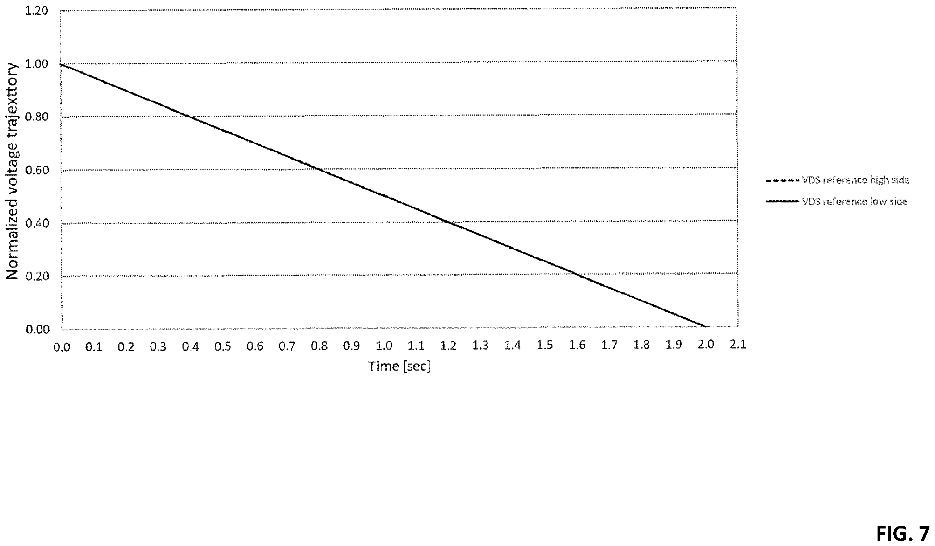

FIG. 7 shows the first and second desired normalised voltage trajectories used by controllers $333_1$ and $333_2$ to control the gate voltages of the first and second transistors 121 and 122 during the active discharge of the DC link capacitor 150. The two desired trajectories in this example are identical and so are overlapping. It can be seen that the y-axis is a normalized voltage trajectory, and so has values between 0 to 1. Note the waveforms of FIGs. 5 and 7 are similar which indicates that the controllers $333_1$ and $333_2$ are performing well in controlling the transistors 121 and 122 such that the measured voltages and the reference trajectory voltages substantially correspond. Any small differences between the two are mostly caused by small time lags/delays as a result of signal delays and processing speeds.

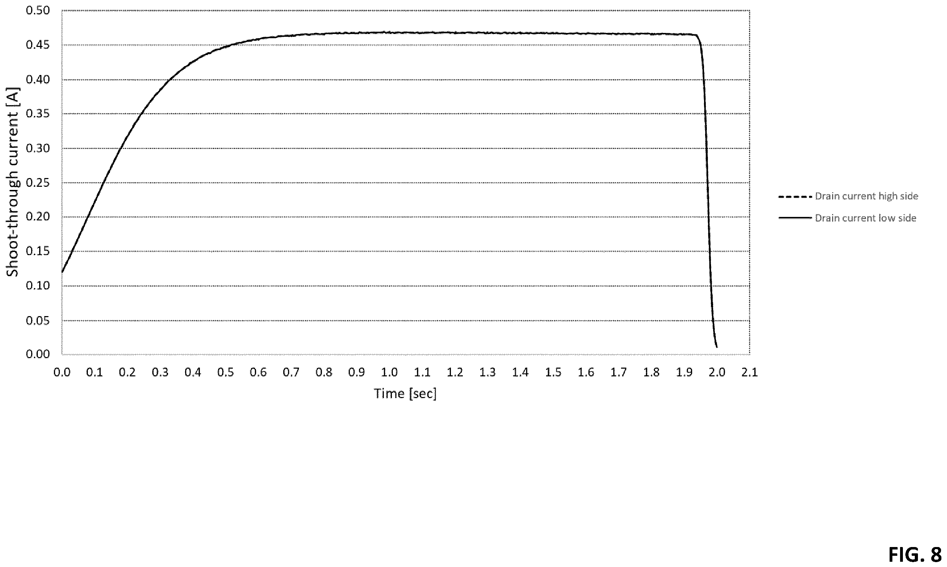

FIG. 8 shows the controlled shoot through current of both power transistors 121 and 121 during the active discharge of the DC link capacitor 150.

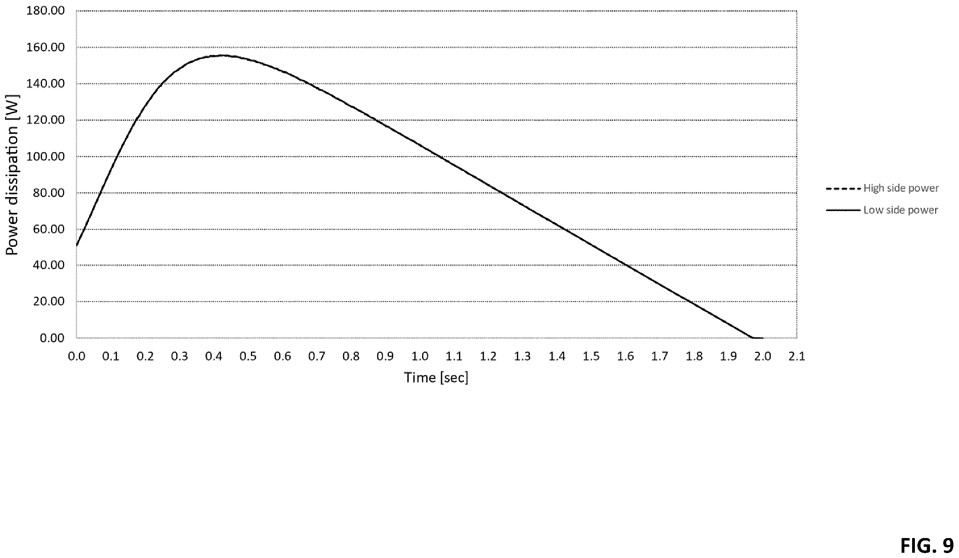

FIG. 9 shows the power in each of the transistors 122 and 123 during the active discharge of the DC link capacitor 150. Similar to FIG. 4 there is a balanced power dissipation through both power transistors 121 and 122, such that they overlap in the Figure. It can be seen that a peak amount of power is reached early during the discharge process. Techniques may be employed to reduce the size of that peak and spread the power more evenly during the discharge process, as described later.

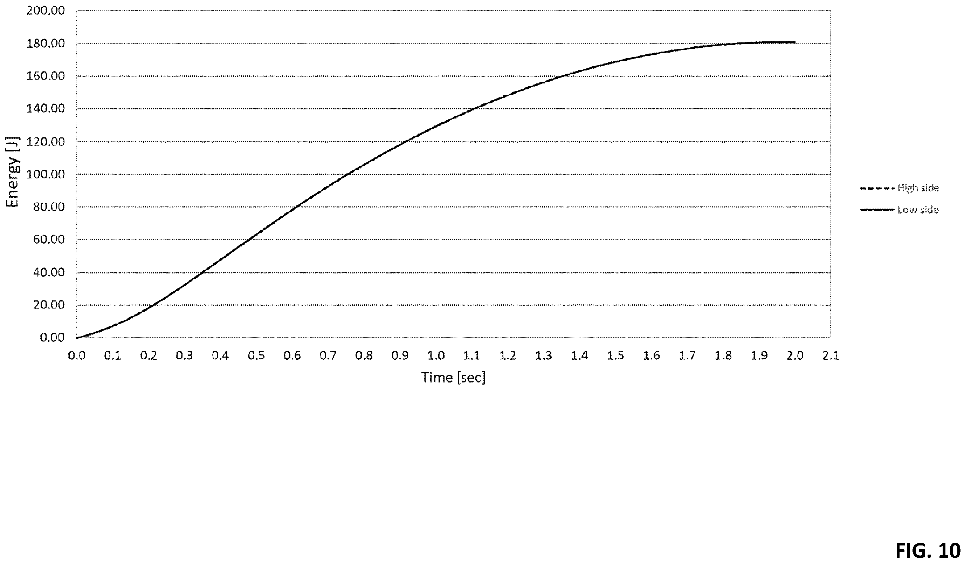

FIG. 10 shows the cumulative energy loss in each of the first and second transistors 121 and 122 during the active discharge of the DC link capacitor 150. Similar to FIG. 3 there is a balanced power dissipation through the transistors 121 and 122, such that they overlap in the Figure.

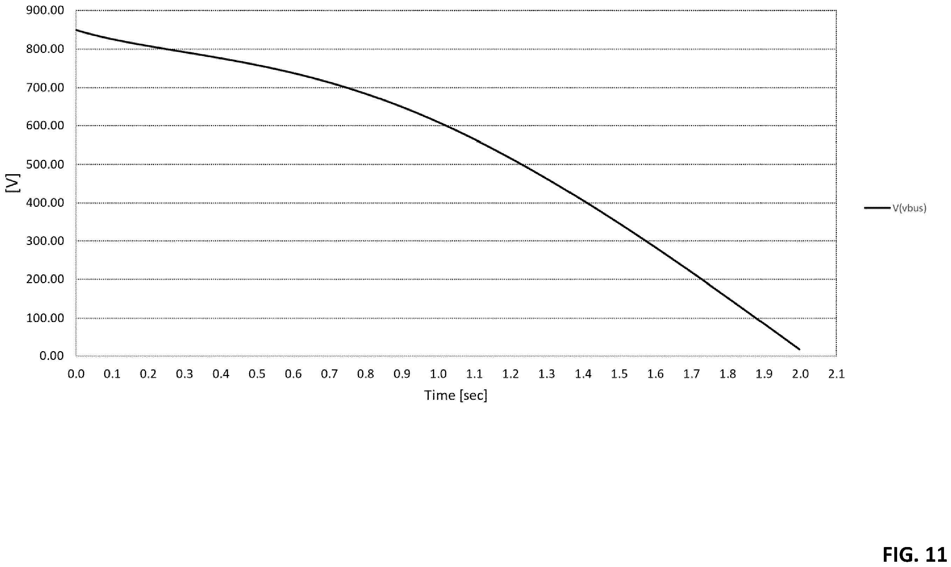

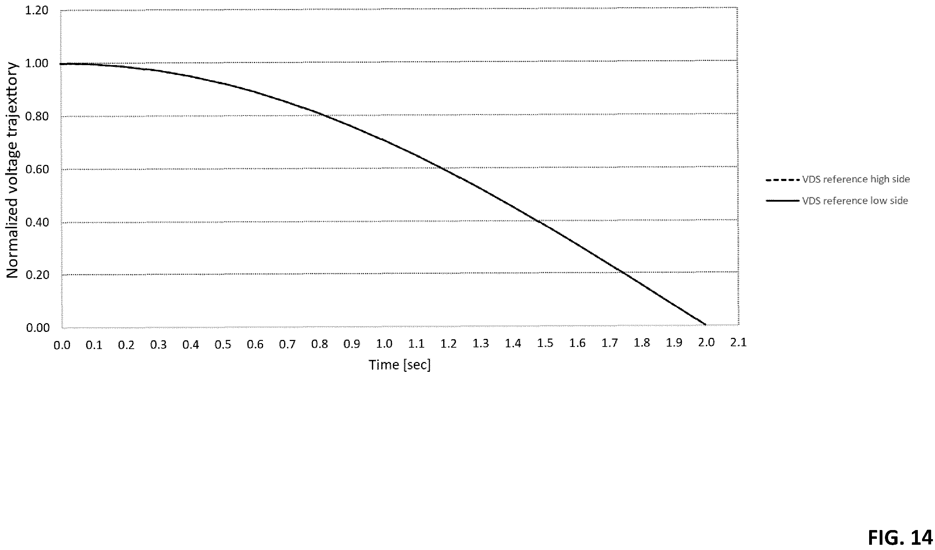

FIGs. 11-17 show a different example operation during active discharge of the DC link capacitor 150 where the first and second desired voltage trajectories are the same as each other and where a non-linear reduction of DC link capacitor voltage from 850V to 0V is desired over a two second period. These Figures are very similar to FIGs 4-10, except that the first and second desired voltage trajectories are not linear (as can be seen in FIG. 14)

FIG. 11 shows the DC link capacitor voltage during active discharge. In this example, there is a balanced power dissipation through both the first and second transistors 121 and 122 and the discharge is non-linear from 850V to 0V across the two second discharge period. Therefore, in this example, from the moment the discharge request signal 305 is issued to the discharge controller 210, two seconds later the capacitor 150 has been discharged to 0V.

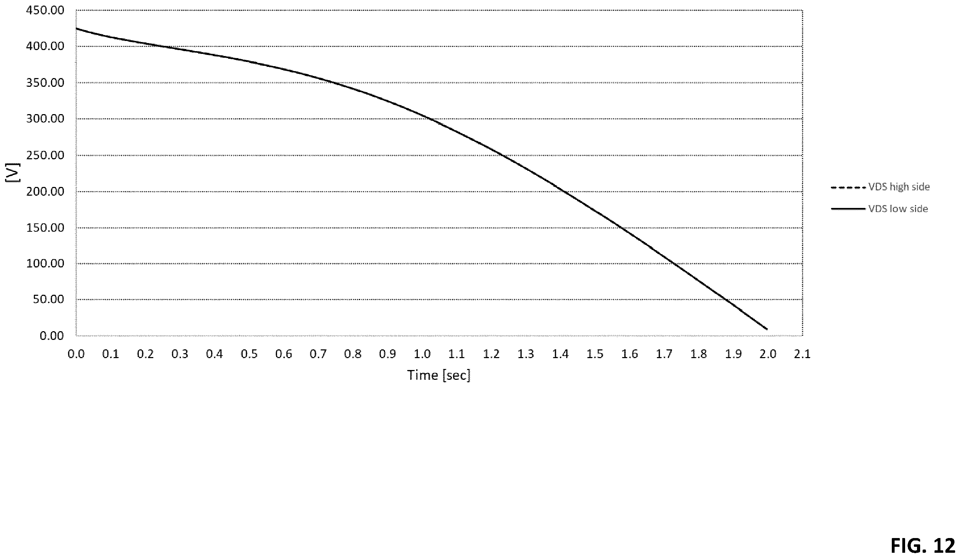

FIG. 12 shows the measured voltage of both power transistors 121 and 122 (i.e., the drain-source voltage of each of the transistors 121 and 122) during the active discharge of the DC link capacitor 150. There is a balanced power dissipation through both power transistors 121 and 122 and the voltage change of both is non-linear from 425V (i.e., 50% of the DC link capacitor voltage) to 0V over the two seconds. Since the voltage change across each transistor 121 and 122 is the same, their discharge profiles overlap in FIG 12 so only one is visible. It will be appreciated that the profile represented in FIG 12 should be similar to the first and second desired voltage trajectories, since the controllers $333_1$ and $333_2$ are configured to control the transistors 121 and 122 during the two second discharge in such a way that the measured voltages 361 and 362 substantially match the references received from voltage trajectory storage $335_1$ and $335_2$.

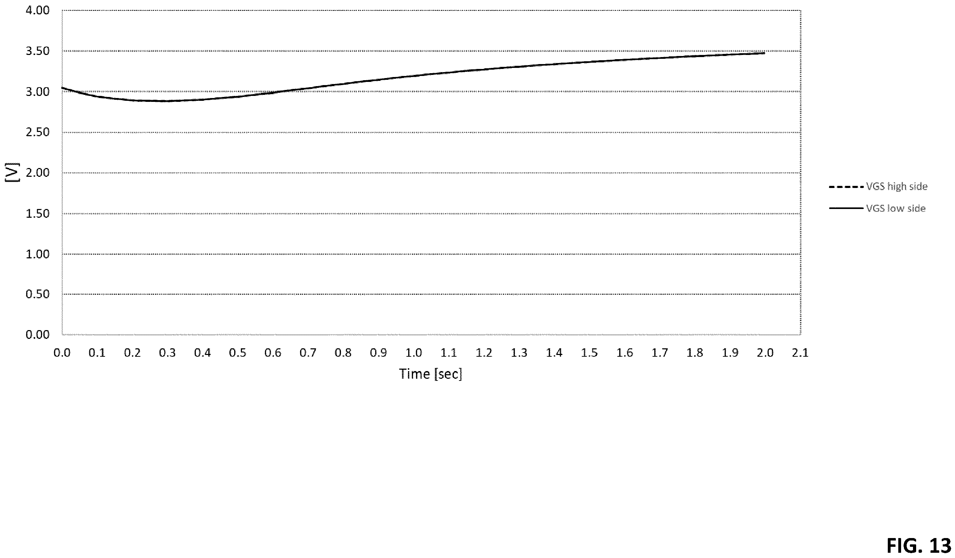

FIG. 13 shows the gate drive voltage output by the controllers $333_1$ and $333_2$ to the power transistors 121 and 122 to control active discharge of the DC link capacitor 150 during the two second discharge period. Since there is a balanced power dissipation through both power transistors 121 and 122 and the circuit in this simulation is ideal/perfect, the gate voltages of both transistors 121 and 122 are the same and therefore overlap in FIG 13. The controller $333_1$ varies the gate voltage of the first transistor 121 periodically/intermittently throughout the discharge period based on a comparison of first measured voltage 361 and the latest reference voltage from the voltage trajectory storage $335_1$, which is the target $V_{DS}$ voltage for the first transistor 121 at that time into the discharge period based on the first desired voltage trajectory. The controller $333_2$ operates in the same way to control the gate voltage of the second transistor 122 based on the second voltage measurement 362 and the reference voltage received from the voltage trajectory storage $335_2$.

FIG. 14 shows the first and second desired normalised voltage trajectories used by controllers $333_1$ and $333_2$ to control the gate voltages of the first and second transistors 121 and 122 during the active discharge of the DC link capacitor 150. The two desired trajectories in this example are identical and so are overlapping. Note the waveforms of FIGs. 5 and 7 are similar which indicates that the controllers $333_1$ and $333_2$ are performing well in controlling the transistors 121 and 122 such that the measured voltages and the reference trajectory voltages substantially correspond. Any small differences between the two are mostly caused by small time lags/delays as a result of signal delays and processing speeds.

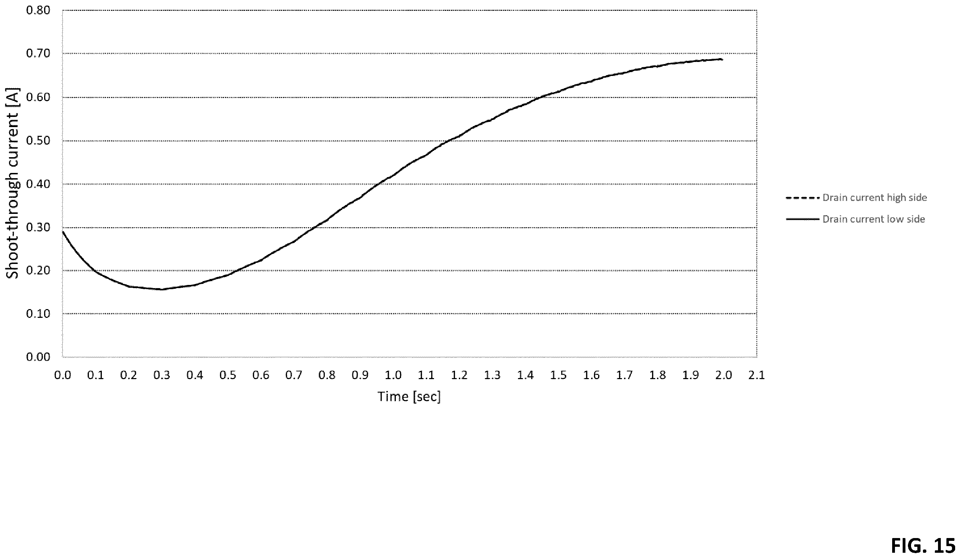

FIG. 15 shows the controlled shoot through current of both power transistors 121 and 121 during the active discharge of the DC link capacitor 150.

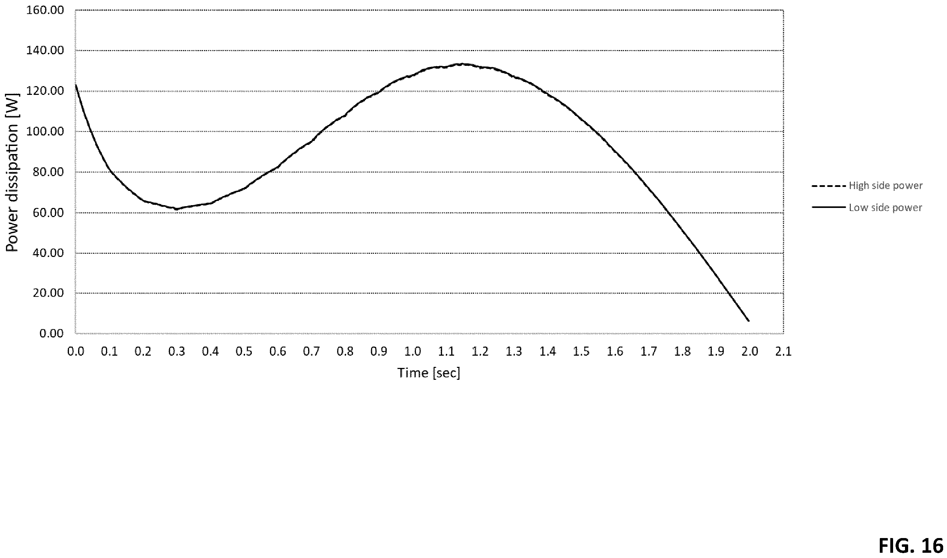

FIG. 16 shows the power in each of the transistors 122 and 123 during the active discharge of the DC link capacitor 150. There is a balanced power dissipation through both power transistors 121 and 122, such that they overlap in the Figure. It can be seen that a peak amount of power is reached later in the discharge process compared with Figure 8, and the peak amount of power is lower. Therefore, it can be readily seen that by employing a different desired voltage trajectory for the transistors 121, 122, peak power dissipation may be reduced and power may be spread more evenly during the discharge process. This may help to reduce wear on the transistors 121, 122, thereby prolonging their useable life.

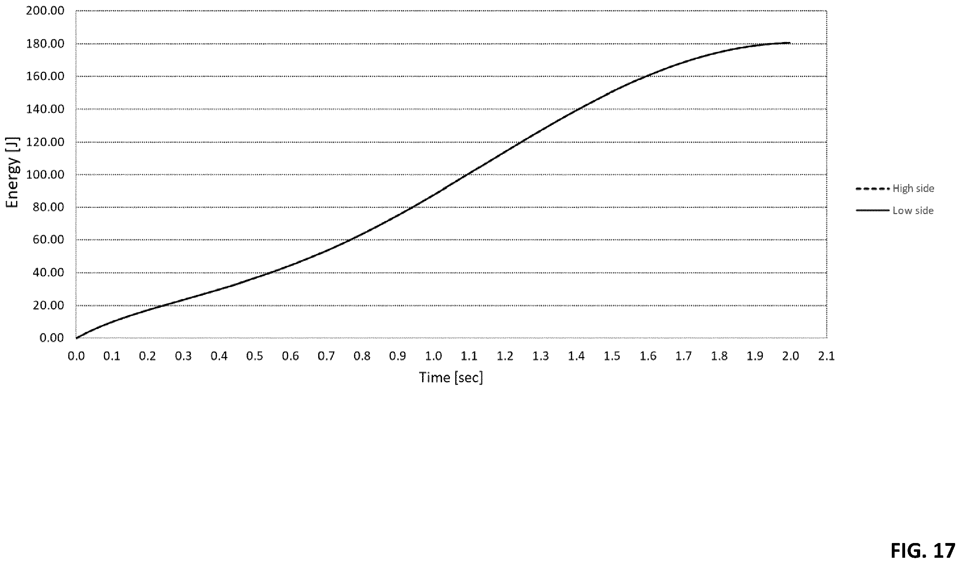

FIG. 17 shows the cumulative energy loss in each of the first and second transistors 121 and 122 during the active discharge of the DC link capacitor 150. There is a balanced power dissipation through the transistors 121 and 122, such that they overlap in the Figure.

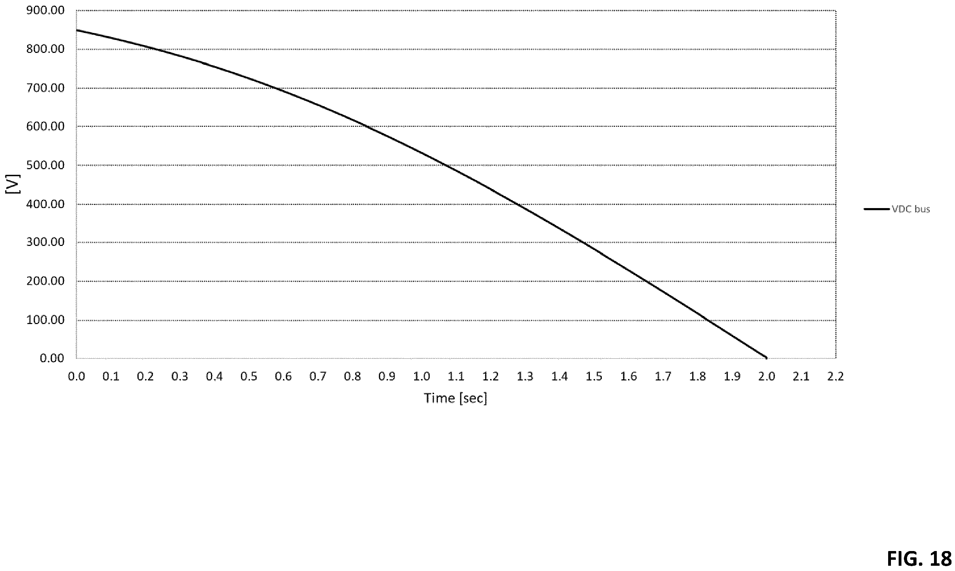

FIGs. 18-24 show another example operation during active discharge of the DC link capacitor 150. In this example, the first and second desired voltage trajectories are different to each other, with each having a different, arbitrary example trajectory. These Figures are very similar to FIGs 4-10 and 11-17, except that the first and second desired voltage trajectories are different.

FIG. 18 shows the DC link capacitor voltage during active discharge. In this example, there is an unbalanced power dissipation through both the first and second transistors 121 and 122 and the discharge is non-linear from 850V to 0V across the two second discharge period. Therefore, in this example, from the moment the discharge request signal 305 is issued to the discharge controller 210, two seconds later the capacitor 150 has been discharged to 0V.

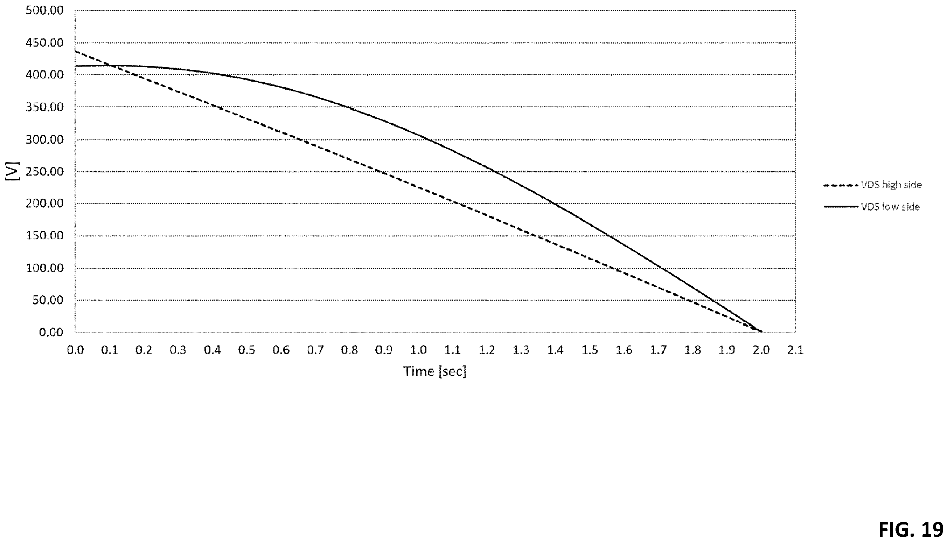

FIG. 19 shows the measured voltage of both power transistors 121 and 122 (i.e., the drain-source voltage of each of the transistors 121 and 122) during the active discharge of the DC link capacitor 150. As can be seen, over the course of the two second discharge period, the voltage profiles of the two transistors 121 and 122 are different. The voltage profile of the first transistor 121 is non-linear and similar to that of FIG 12. It will be appreciated that the profiles represented in FIG 12 should be similar to the first and second desired voltage trajectories, since the controllers $333_1$ and $333_2$ are configured to control the transistors 121 and 122 during the two second discharge in such a way that the measured voltages 361 and 362 substantially match the references received from voltage trajectory storage $335_1$ and $335_2$.

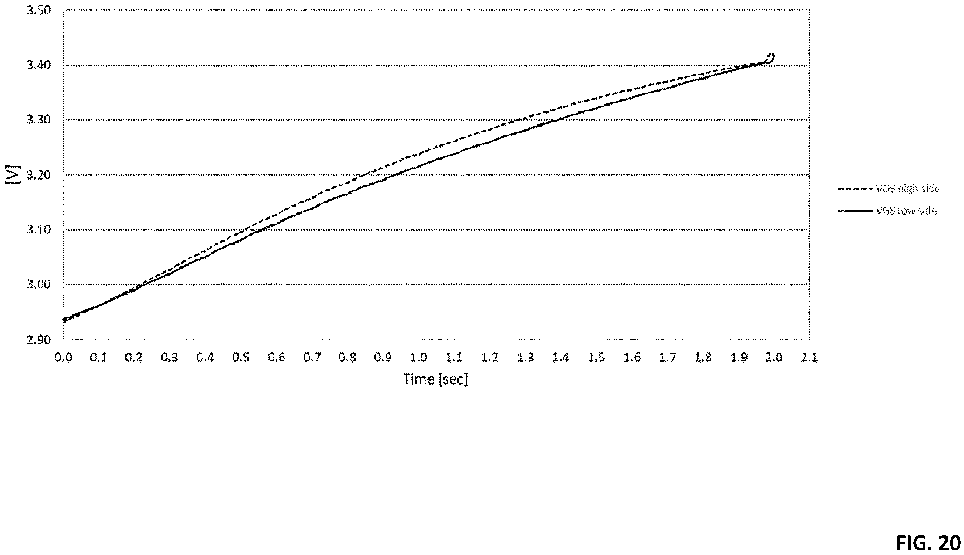

FIG. 20 shows the gate drive voltage output by the controllers $333_1$ and $333_2$ to the power transistors 121 and 122 to control active discharge of the DC link capacitor 150 during the two second discharge period. As can be seen, as a result of the different desired voltage trajectories, the gate voltages of each transistor 121 and 122 are different over time. The controller $333_1$ varies the gate voltage of the first transistor 121 periodically/intermittently throughout the discharge period based on a comparison of first measured voltage 361 and the latest reference voltage from the voltage trajectory storage $335_1$, which is the target $V_{DS}$ voltage for the first transistor 121 at that time into the discharge period based on the first desired voltage trajectory. The controller $333_2$ operates in the same way to control the gate voltage of the second transistor 122 based on the second voltage measurement 362 and the reference voltage received from the voltage trajectory storage $335_2$.

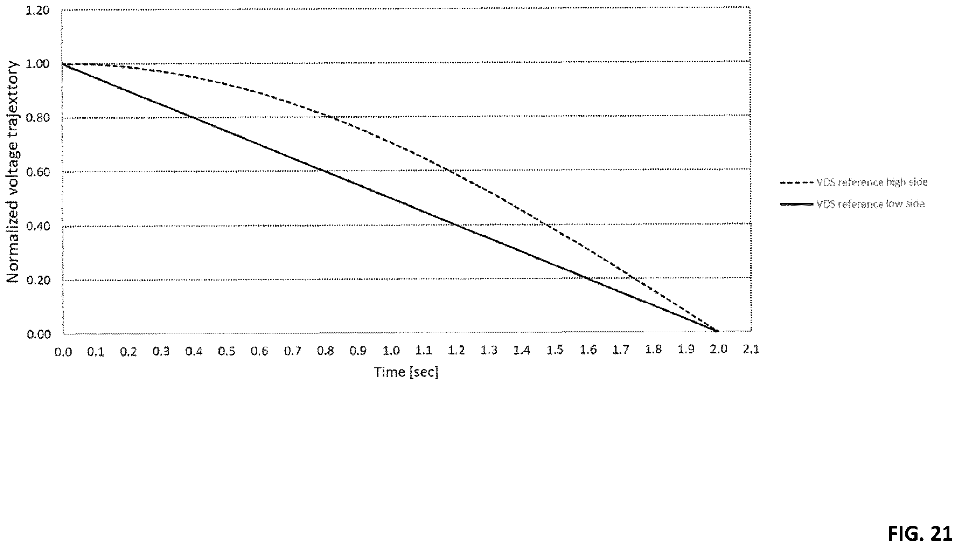

FIG. 21 shows the first and second desired voltage trajectories used by controllers $333_1$ and $333_2$ to control the gate voltages of the first and second transistors 121 and 122 during the active discharge of the DC link capacitor 150. The two desired trajectories in this example are different. The first voltage trajectory is non-linear and is similar to that of FIG 14. The second voltage trajectory is substantially linear and is similar to that of FIG. 9. Note the waveforms of FIGs. 19 and 21 are similar which indicates that the controllers $333_1$ and $333_2$ are performing well in controlling the transistors 121 and 122 such that the measured voltages and the reference trajectory voltages substantially correspond. Any small differences between the two are mostly caused by small time lags/delays as a result of signal delays and processing speeds.

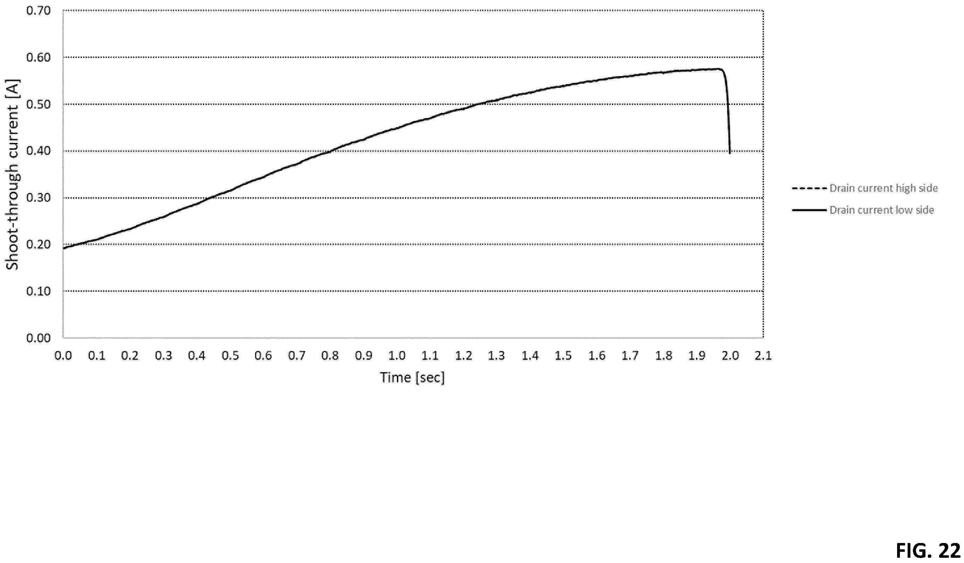

FIG. 22 shows the controlled shoot through current of both power transistors 121 and 121 during the active discharge of the DC link capacitor 150.

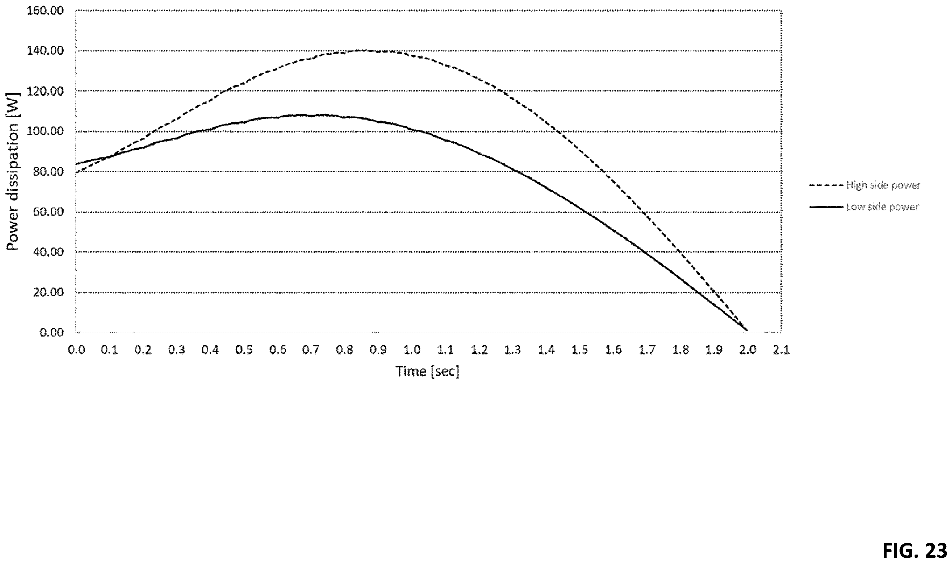

FIG. 23 shows the power in each of the transistors 121 and 122 during the active discharge of the DC link capacitor 150. There is an unbalanced power dissipation through both power transistors 121 and 122, so the profiles of the two in FIG. 23 are different. Therefore, it can be readily seen that by employing different desired voltage trajectories for the transistors 121, 122, the peak power dissipation by each transistor and the spread of power for each transistor may be controlled to be different. This enhances the flexibility of the system, for example enabling more power/high peak power to be dissipated in a transistor that is of a more robust design, or that has better cooling, thereby prolonging the useable life of the transistors.

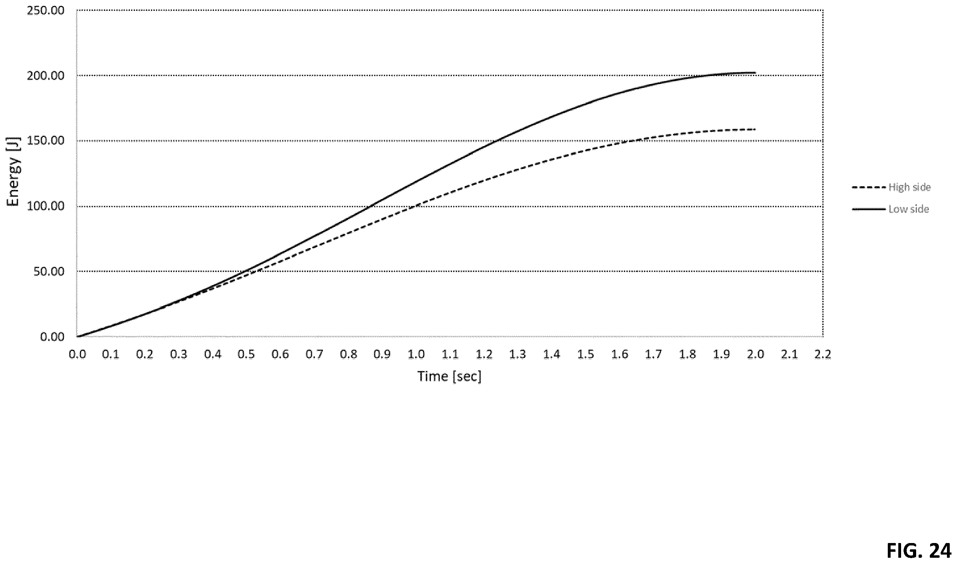

FIG. 24 shows the cumulative energy loss in each of the first and second transistors 121 and 122 during the active discharge of the DC link capacitor 150. There is unbalanced power dissipation through the transistors 121 and 122, so the amount of energy that they each dissipate is different.

It should be appreciated that any desired trajectories may be used for the first and second desired voltage trajectories, and that they may be the same as each other or different. In some examples, the trajectories may be set such that the total energy dissipated in each transistor is substantially the same, or balanced, but that the power dissipation is different, or unbalanced, so that the transistors different peak power levels and/or timing.

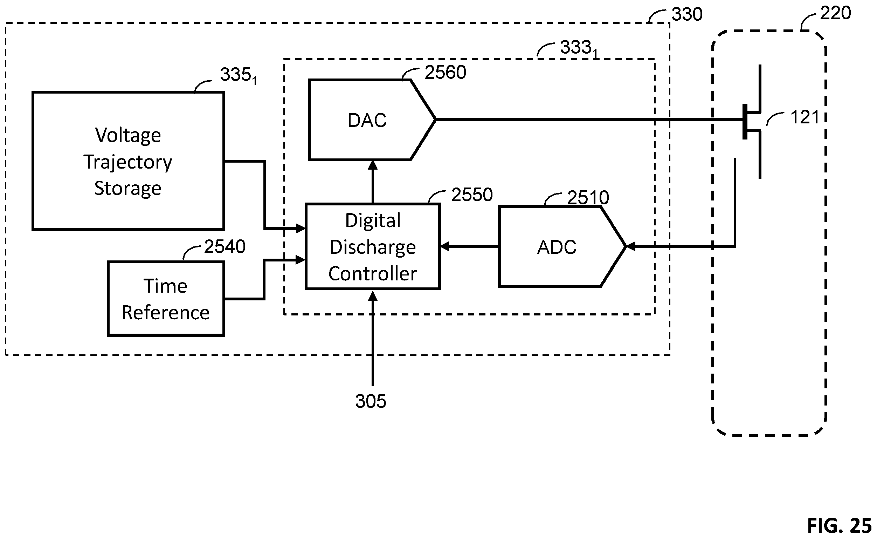

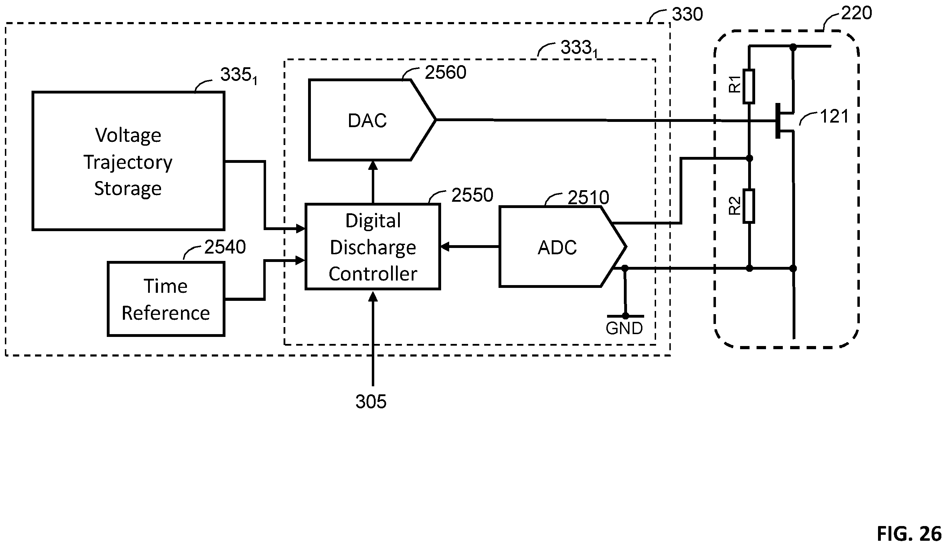

FIG. 25 illustrates a detailed view of an example of the first gate driver 330 in accordance with another aspect of the invention. Only a single transistor 121 of switch circuit 220 is depicted in FIG. 25. Nonetheless, any one or more of the switch circuits 220's remaining transistors, for example the second transistor 122, may be controlled by a further gate driver(s), such as the second gate driver 340, which may be configured in the same way as the first gate driver 330. The first gate driver 330 in this example comprises an analog to digital converter (ADC) 2510 for measuring a voltage across transistor 121 (for example, the drain-source voltage, or the collector-emitter voltage, of the transistor 121). Further details relating to this measurement are described with reference to FIG. 26 below.

In this example, the desired voltage trajectory may be defined by a look-up table that is stored in the voltage trajectory storage $335_1$. The look up table may comprise a plurality of values, each corresponding to a desired voltage at a particular time point during the discharge process (for example, a voltage value for each 0.01, or 0.05, or 0.1 seconds throughout the desired 2, or 3, or 4, or 5 second discharge period). The data populating the look-up table may have been received as data $302_1$ from the traction inverter 310 described earlier, or by any other suitable means. In this example, the first gate driver 330 includes a time reference 2540, which might be a clock generating a periodic clock signal that is received by the digital discharge controller 2550, although in an alternative the first gate driver 330 may not include a time reference 2540 and may instead receive a clock signal from elsewhere (for example, from a general purpose clock signal used for other circuits/systems). Using the signal from the time reference 2540, the digital discharge controller 2550 can determine at any moment how far through the discharge period it is and then look up in the voltage trajectory storage $335_1$ what the desire voltage is.

The output from ADC 2510 is a digital measurement of the voltage across the channel terminals of transistor 121 and is input into the digital discharge controller 2550. After receiving a discharge request signal 305, the digital discharge controller 2550 may initiate capacitor discharge by outputting a digital value to the digital to analog converter (DAC) 2560 to set an initial gate-source voltage at the transistor 121 (for example, an initial digital value may be held by the digital discharge controller 2550 or may be stored elsewhere and looked up by the digital discharge controller 2550 upon receipt of the discharge request signal 305). Optionally, the first gate driver 330 may also include a switch to serially couple the output of the DAC 2560 to the gate of transistor 121, which the digital discharge controller 2550 may be configured to hold in an open state during normal inverter system 200 operation, and then close upon receipt of the discharge request signal 305 so that the first gate driver 330 can take over control of the transistor 121 for capacitor discharge. After starting capacitor discharge, the digital discharge controller 2550 may periodically or intermittently compare the digital measurement received from the ADC 2510 to the desired voltage that has been looked up from the voltage trajectory storage $335_1$. Based on this comparison, the digital discharge controller 2550 may set the digital value that is output to the converter 2560, the analog output of which drives the gate of transistor 121. For example, if the comparison reveals that the transistor voltage is currently above the desired voltage trajectory, the digital discharge control 2550 may change the digital output value in order to drive the transistor 121 with a larger gate-source voltage in order to turn the transistor on more (and vice-versa). In this example, the gate of the transistor 121 is driven without using the gate driver stage (no shown in FIG. 25 for the sake of simplicity) that is used for PWM control during normal inverter system 200 operation. During capacitor discharge, use of the gate driver stage for PWM control may cease, for example by virtue of a PWM controller that controls the gate driver stage receiving the discharge request signal 305, or receiving a signal from the digital discharge controller 2550 indicating that capacitor discharge is taking place, and then ceasing to control the gate driver stage.

FIG. 26 shows the use of a potential divider comprising resistors R1 and R2, for use in measuring the voltage across transistor 121. In this example, the signal converted by the ADC 2510 is smaller than, but proportionate to, the voltage across the transistor 121. This is particularly useful where the volage across the transistor 121 is relatively high (which will typically be the case where the DC voltage source is a high voltage battery, such as the battery 110 in FIG.1), as it enables a relatively low voltage ADC 2510 to be used. Also in this example the ADC 2510 is a differential input ADC, although other ADC configurations may be used. The ADC 2510 may be any type of ADC, such as sigma-delta, flash, SAR, etc. In this example, one end of the potential divider and one input to the ADC 2510 are held at a local ground voltage, although they may be held at any other suitable reference voltage. It will be appreciated that this is merely one example way of measuring voltages across a transistor and other configurations may also be employed, for example not requiring the potential divider and simply directly digitally converting the voltage across the drain and source terminals of the transistor 121.

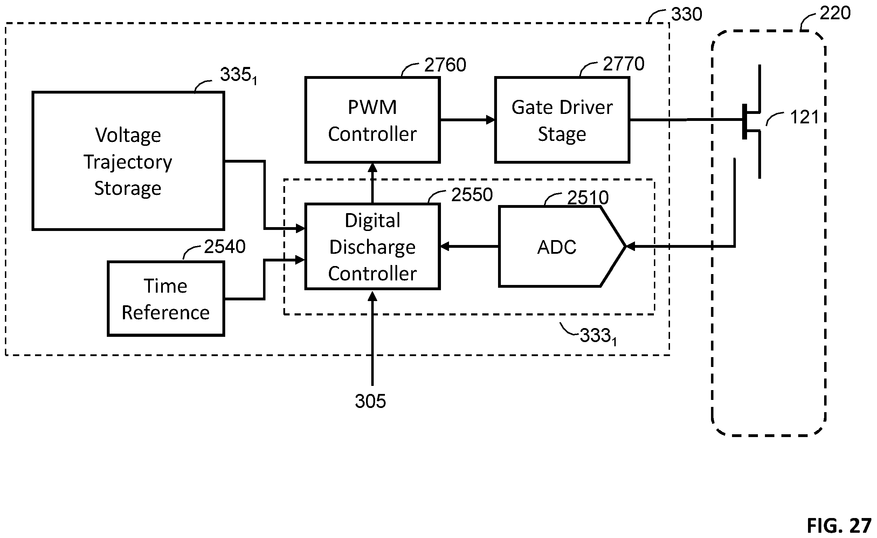

FIG. 27 illustrates a detailed view of the first gate driver 330 in accordance with another aspect of the invention. Like reference signs in FIGs. 25, 26 and 27 represent the like components and will not be described further. In this example, the digital output of the digital discharge controller 2550 is received by a PWM controller 2760, which is the module/unit that is configured to control the inverter system 200 during normal DC to AC operation. In this example, the digital discharge controller 2550 may set the output digital value exactly as described earlier and, upon receipt of a value from the digital discharge controller 2550, the PWM controller 2760 may be configured to set the gate drive voltage based on the received digital value. The PWM controller 2760 may output an analog value (for example, an analog conversion of the received digital value, or a value that is derived in some other way from the received digital value) to a gate driver stage 2770 that then drives the transistor 121. The gate driver stage 2770 may, for example, comprise one or more transistors that are configured to control at the transistor gate a higher voltage and/or stronger current drive signal based on the analog value received from the PWM controller 2760. In this example, during the capacitor discharge process, the PWM controller 2760 may set the desired gate-source voltage by applying a PWM signal with an average value that is equal to the desired gate-source voltage. Typically the output of the gate driver stage 2770 and the gate of transistor 121 will be coupled by a series resistor (not shown in FIG. 27 for simplicity), which may form a low pass RC filter with the intrinsic capacitance of transistor 121, rejecting the high frequency content of the PWM signal coming from the PWM controller 2760. In one particular example, a segmented gate driver stage 2770 may be used where some but not all (for example, one or a few) of the segments may be used during capacitor discharge. This is then equivalent to using a weak gate driver stage, which has relatively high internal resistance, thereby increasing the overall resistance of the low pass RC filter. Consequently, the pole of the low pass RC filter should move to a lower frequency, thereby becoming more useful for this mode of operation. During normal PWM operations, more (for example, all) of the segments of the gate driver stage 2770 may be used, which should maximise drive strength during that mode of operation.

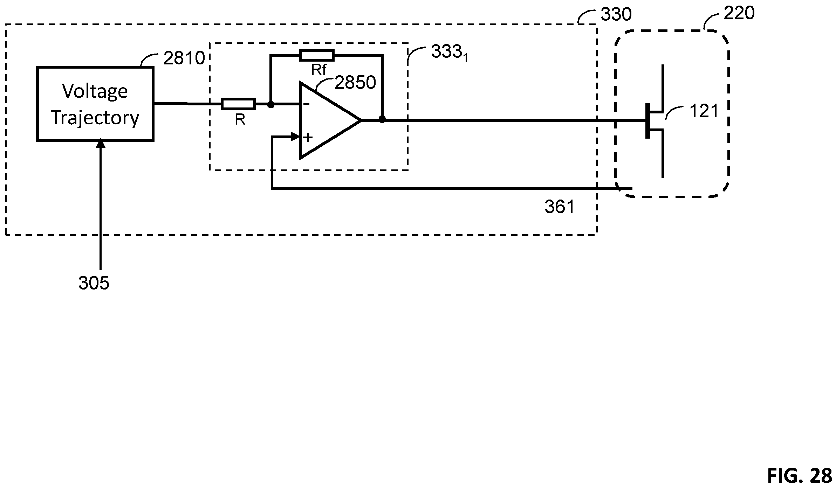

FIG. 28 illustrates a detailed view of an example analog implementation of the first gate driver 330 in accordance with another aspect of the disclosure. Like reference signs in FIGs. 25, 26, 27 and 28 represent the like components and will not be described further. The first gate driver 330 in this example comprises an analog controller $333_1$ that includes an operational amplifier 2850 and resistors R and Rf that are together arranged to form an amplifier. The amplifier outputs a signal that is dependent on a difference between the first voltage measurement 361 (for example, a measure of the drain-source voltage of the transistor 121) and an analog reference voltage or current output by a voltage trajectory circuit/module 2810. The output of the amplifier drives the gate of transistor 121, so during capacitor discharge, any change in the difference between the first voltage measurement 361 and the reference signal output by the voltage trajectory module/circuit 2810 should result in a change in the signal output by the amplifier, thereby completing a servo loop to control the transistor 121 and ensure that transistor voltage profile during discharge tracks the desired voltage trajectory. The voltage trajectory circuit/module 2801 may be configured in any suitable way such that it outputs an analog reference signal that changes in an appropriate way during capacitor discharge. For example, it may comprise one or more capacitors with suitable time constants that, upon receipt of a discharge request signal 305, are controlled to discharge in such a way that throughout the discharge period, a difference between the generated analog signal and the first measured voltage 361 results in a gate drive signal that controls the transistor 121 to achieve a voltage across the transistor 121 that tracks the desired voltage trajectory. Whilst in this example, the analog controller $333_1$ comprises a negative feedback op-amp amplifier, it will be appreciated that other suitable type of amplifier circuit, or any other type of circuit that sets the gate voltage based on the first measurement voltage 361 and the analog reference voltage signal, may be used. Furthermore, optionally the output of the amplifier and the gate of the transistor 121 may be coupled via a series switch that can be controlled by the discharge request signal 305, or any other suitable signal. In this case, the switch may be held open during normal inverter system 200 PWM operation and closed only when capacitor discharge is desired.

Whilst not represented in FIG. 28, the voltage trajectory 2810 may be re-configurable, for example by control signals from the MCU 310, so that the desired trajectory may be adjusted/changed over time (for example, in the field). In this case, in addition to analog circuitry generating the reference signal that is output to the analog controller $333_1$, the voltage trajectory 2810 may optionally further comprise digital circuitry to receive digital control signals and make the necessary adjustments to the analog circuitry (for example switching in and/or out capacitors in order to change the time constant of the circuit).

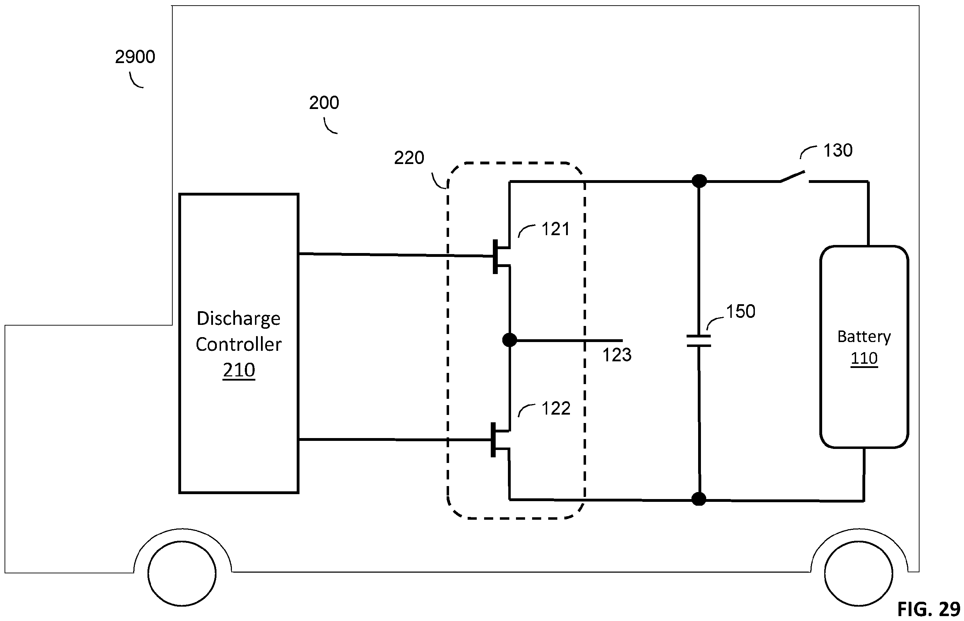

FIG. 29 shows a vehicle 2900, such as an electric car, that includes the DC link discharge system 200 of FIG .2 described above.

The skilled person will readily appreciate that various alterations or modifications may be made to the above described aspects of the disclosure without departing from the scope of the disclosure.

The first gate driver 330 and the second gate driver 340 may be configured identically, for example in any of the ways represented in FIGs 25 to 28, or differently. For example, the first gate driver 330 may be configured in any of the ways described above and the second gate driver 340 configured merely to fully turn-on the second transistor 122 during capacitor discharge so that most/all power is dissipated in the first transistor 121. Likewise, the second gate driver 340 may be configured in any of the ways described above and the first gate driver 330 configured merely to fully turn-on the first transistor 121 during capacitor discharge so that most/all power is dissipated in the second transistor 122.

In the examples above, the traction inverter MCU 310 (for example) can configure both the isolated gate drivers 330 and 340, ensuring either identical or varied reference voltage trajectories which allows for equal power dissipation across both the first and second transistors 121 and 122, or different power dissipation across the first and second transistors 121 and 122. For example, different levels of power dissipation may be set based on measured transistor 121 and 122 temperatures, minimizing thermal stress. In this example, the MCU 310 (for example) may periodically/intermittently receive measurements indicative of the temperature of the first transistor 121 and/or second transistor 122 and

use data signals $302_1$ and $302_2$ to update the desired voltage trajectories (for example, to dissipate more power in the lower temperature transistor). Additionally or alternatively, the controllers $333_1$ and $333_2$ may be configured to modify their control of the transistors based on received measurements indicative of transistor temperature. For example, they may each receive measurements indicative of both transistor temperatures and be modify their gate control accordingly.

In the examples above, transistors of a single inverter leg of the inverter system 200 are controlled to perform capacitor discharge. In an alternative, multiple inverter legs (eg, two or more) of the inverter system 200 may be used. For example, each transistor in the inverter system 200 may have a corresponding gate driver configured as described above and the system may be configured to alternate between different legs for each capacitor discharge, so that over the lifetime of the system each transistor in the inverter system 200 is used for capacitor discharge a roughly equal amount, thereby achieving even wear. Alternatively, during a single capacitor discharge, the system may be configured to hop between two or more inverter legs of the inverter system 200 so that different transistors are used at different times during capacitor discharge. In this case, the first gate driver 330 may be switchably coupled to two or more "top" transistors in the inverter system 200 and the second gate driver 340 may be switchably coupled to two or more "bottom" transistors in the inverter system 200, with the switches being controlled (by the gate drivers, or by any other control entity) so that the transistor to which the gate driver is coupled changes during the capacitor discharge period. Alternatively, each transistor of the inverter system 200 may have a respective gate driver that are configured to coordinate with each other on which gate driver is controlling capacitor discharge at any given time. In a further alternative, the transistors in two or more inverter legs of the inverter system 200 may be controlled by respective gate drivers simultaneously to dissipate the capacitor energy in parallel. A further benefit of having the capability of discharging the capacitor through two or more of the inverter legs is discharge redundancy. If discharge should be restricted or prevented via one of the inverter legs (for example as a result of component fault or failure), discharge may still be effected as a result of discharge through one or more of the other inverter legs. This may further improve the functional safety of the system.

Additionally, should a safety MCU be integrated (for example on the high-voltage side of the system), it too can trigger active discharge. In this example, capacitor discharge may be initiated by one or more different units/devices, for example the low-voltage traction inverter MCU 310 and/or a high-voltage safety MCU.

During the capacitor discharge process, conventional overcurrent protection methods like DESAT may be deactivated.

The term "coupled" encompasses both direct electrical connections between components, and indirect electrical connections between components (for example, the electrical connection of two components via one or more intermediate components).

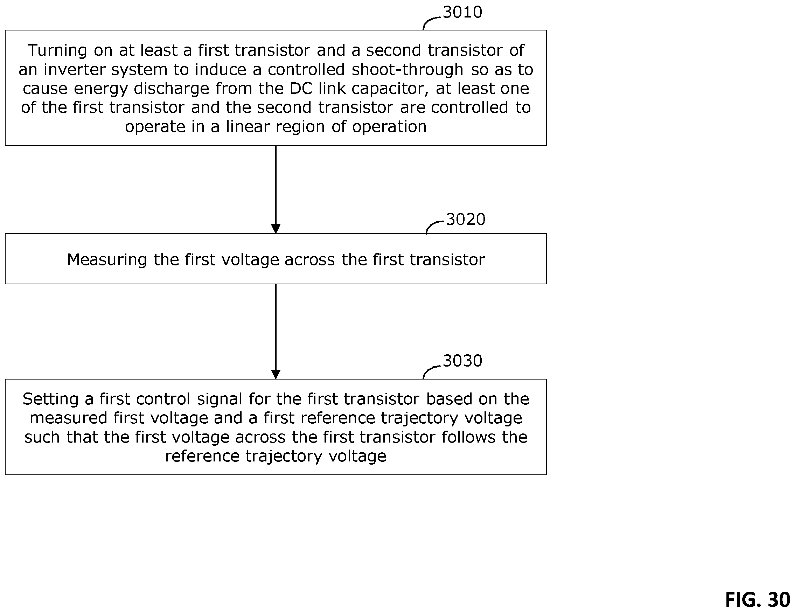

FIG. 30 shows a flow diagram illustrating a method for discharging energy from a DC link capacitor in an inverter system according to another aspect of the disclosure. The inverter system comprising a plurality of transistors that are controllable to convert a DC voltage to an AC voltage. The method comprising discharging the DC link capacitor by: at step 3010 turning on at least a first transistor and a second transistor of the plurality of transistors to induce a controlled shoot-through so as to cause energy discharge from the DC link capacitor, wherein at least one of the first transistor and the second transistor are controlled to operate in a linear region of operation; at step 3020 measuring a first voltage across the first transistor and at step 3030 setting a first control signal for the first transistor based on the measured first voltage and a first reference trajectory voltage such that the first voltage across the first transistor follows the reference trajectory voltage. The above method may be performed by the DC link discharge system 200.

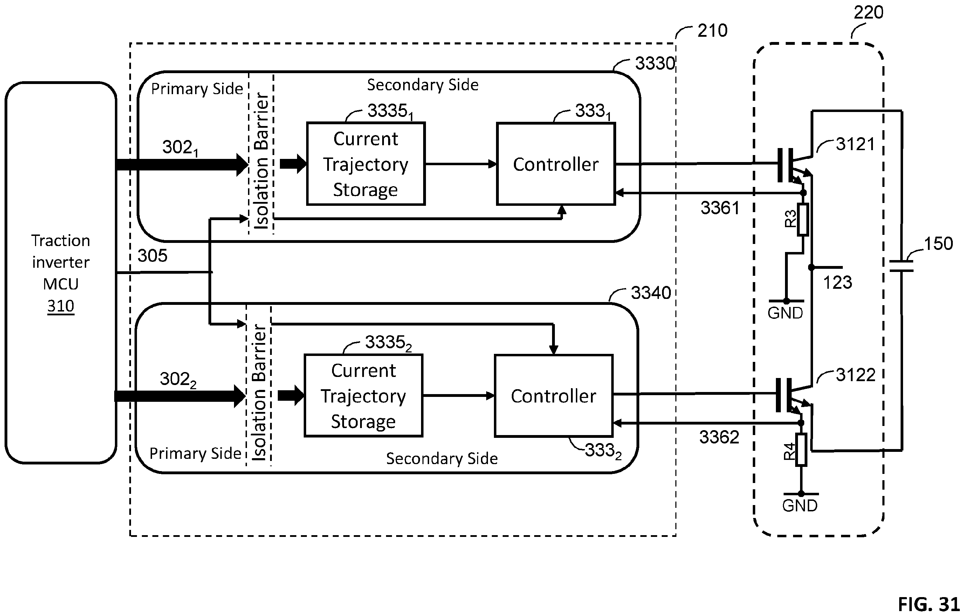

FIG. 31 illustrates an alternative configuration of a discharge controller 210, similar to FIG. 3. In this version, the first and second transistors 121 and 122 from FIG. 3 are replaced with split emitter IGBTs (Insulated Gate Bipolar Transistors) 3121 and 3122, respectively. These split emitter IGBTs are controlled by the first and second gate drivers 330 and 340, similar to the examples described in detail above.

The primary change in the discharge controller 210 of FIG. 31 is the use of current measurements for controlling the IGBTs 3121 and 3122. The first voltage measurement 361 of FIG. 3 is replaced by a first current measurement 3361, which is a measurement of current from one of the two emitters of IGBT 3121. In this example, the first current measurement 3361 is made using a shunt resistor R3 in order to convert the current to a voltage, which may then be utilised as described earlier. In this example, the second current measurement 3362 is made using a shunt resistor R4 in order to covert the current to a voltage, which may then be utilised as described earlier. These current measurements provide feedback to the respective gate drivers, influencing the control of the IGBTs during capacitor discharge.

Additionally, the voltage trajectory storages $335_1$ and $335_2$ of FIG. 3 are replaced by the first current trajectory storage $3335_1$, and the second current trajectory storage $3335_2$. These storages now primarily hold data related to desired current trajectories.

Overall, the example represented in FIG. 31 maintains the functionality of the discharge controller seen in FIG. 3, with adaptations to enable current based servo-loop control during capacitor discharge. Whilst FIG. 31 represents one example way in which transistor current measurements may be made in order to achieve current based servo-loop control, any other suitable techniques may alternatively be used.

The above embodiments are to be understood as illustrative examples. Further embodiments are envisaged. It is to be understood that any feature described in relation to any one embodiment may be used alone or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Aspects of the disclosure**

Non-limiting aspects of the disclosure are set out in the following numbered clauses.

1. An inverter system for connecting to a DC power source, the inverter system comprising:

a plurality of transistors that are controllable to convert a DC voltage to an AC voltage;
a DC link capacitor; and
a discharge controller configured to cause a discharge of energy from the DC link capacitor when the DC power source is disconnected from the inverter system,
wherein the discharge controller is configured to cause the discharge of energy from the DC link capacitor by turning on at least a first transistor and a second transistor of the plurality of transistors so as to cause a controlled shoot-through, and
wherein at least one of the fist transistor and the second transistor are controlled by the discharge controller to operate in a linear region of operation.

2. The inverter system of clause 1, wherein the discharge controller further comprises a first servo loop circuit for controlling the first transistor.

3. The inverter system of clause 2, wherein the first servo loop circuit further comprises:

a first voltage measurement circuit configured to measure a first voltage across the first transistor, and
wherein the first servo loop circuit is configured to set a first control signal for the first transistor based on the measured first voltage and a first reference trajectory voltage such that the first voltage across the first transistor follows the reference trajectory voltage.

4. The inverter system of clause 3, wherein the first reference trajectory voltage is set based on a target discharge profile of the DC link capacitor.

5. The inverter system of clause 4, wherein the first reference trajectory voltage is further based on a first temperature measurement associated with the first transistor.

6. The inverter system of any of clauses 2 to 5, further comprising:
a second servo loop circuit for controlling the second transistor.

7. The inverter system of clause 6, wherein the second servo loop circuit further comprises:

a second voltage measurement circuit configured to measure a second voltage across the second transistor, and
wherein the second servo loop circuit is configured to set a second control signal for the second transistor based on the measured second voltage and a second reference trajectory voltage such that the second voltage across the second transistor follows the reference trajectory voltage.

8. The inverter system of clause 7, wherein the second reference trajectory voltage is set based on the target discharge profile of the DC link capacitor.

9. The inverter system of clause 8, wherein the second reference trajectory voltage is further based on the second temperature measurement associated with the second transistor.

10. The inverter system of clause 2, wherein the first servo loop circuit further comprises:

a first current measurement circuit configured to measure a first shoot through current through the first transistor, and
wherein the first servo loop circuit is configured to set a first control signal for the first transistor based on the measured first shoot through current and a first reference trajectory current such that the first shoot through current through the first transistor follows the first reference trajectory current.

11. The inverter system of clause 10, further comprising:

a second servo loop circuit for controlling the second transistor, and
wherein the second servo loop circuit comprises:
a second current measurement circuit configured to measure a second shoot through current through the second transistor, and

wherein the second servo loop circuit is configured to set a second control signal for the second transistor based on the measured second shoot through current and a second reference trajectory current such that the second shoot through current through the second transistor follows the second reference trajectory current.

12. The inverter system of any one of clauses 1 to 5 and 10, wherein the discharge controller is configured to set a second control signal for the second transistor to turn the second transistor fully on.

13. The inverter system any preceding clause, wherein the discharge controller is further configured to cause the discharge of energy from the DC link capacitor by turning on at least a third transistor and a fourth transistor of the plurality of switches so as to cause a controlled shoot-through of a first inverter leg formed by the first transistor and the second transistor, and a second inverter leg formed by the third transistor and the fourth transistor, wherein at least one of the third transistor and the fourth transistor are controlled by the discharge controller to operate in a linear region of operation.

14. The inverter system of any preceding clause, wherein the discharge controller is configured to discharge energy from the DC link capacitor to a predetermined capacitor voltage within a predetermined time period.

15. The inverter system of any preceding clause, wherein each of the first transistor and second transistor are any one of a Silicon MOSFET, an SiC MOSFET, a GaN MOSFET, or an IGBT.

16. An Electric Vehicle comprising an inverter system, wherein the inverter system comprises:

   a plurality of transistors that are controllable to convert a DC voltage to an AC voltage;
   a DC link capacitor; and
   a discharge controller configured to cause a discharge of energy from the DC link capacitor when the DC power source is disconnected from the inverter system,
   wherein the discharge controller is configured to cause the discharge of energy from the DC link capacitor by turning on at least a first transistor and a second transistor of the plurality of switches so as to cause a controlled shoot-through, and
   wherein at least one of the fist transistor and the second transistor are controlled by the discharge controller to operate in a linear region of operation.

17. A method for discharging energy from a DC link capacitor in an inverter system comprising a plurality of transistors that are controllable to convert a DC voltage to an AC voltage, the method comprising discharging the DC link capacitor by:
turning on at least a first transistor and a second transistor of the plurality of switches to induce a controlled shoot-through so as to cause energy discharge from the DC link capacitor, at least one of the first transistor and the second transistor are controlled to operate in a linear region of operation.

18. The method of clause 17, further comprising:

   measuring a first voltage across the first transistor, and
   setting a first control signal for the first transistor based on the measured first voltage and a first reference trajectory voltage such that the first voltage across the first transistor follows the reference trajectory voltage.

19. The method of clause 18, wherein the first reference trajectory voltage is set based on a target discharge profile of the DC link capacitor.

20. The method of clause 19, wherein the first reference trajectory voltage is further based on a first temperature measurement associated with the first transistor.

21. The method of any of clauses 17 to 20, further comprising:

   measuring a second voltage across the second transistor, and
   setting a second control signal for the second transistor based on the measured second voltage and a second reference trajectory voltage such that the second voltage across the second transistor follows the reference trajectory voltage.

22. The method of clause 21, wherein the second reference trajectory voltage is set based on the target discharge profile of the DC link capacitor.

23. The method of clause 22, wherein the second reference trajectory voltage is further based on the second temperature measurement associated with the second transistor.

24. The method of clause 17, further comprising:

   measuring a first shoot through current through the first transistor, and

setting a first control signal for the first transistor based on the measured first shoot through current and a first reference trajectory current such that the first shoot through current of the first transistor follows the first reference trajectory current.

25. The method of clause 24, further comprising:

measuring a second shoot through current through the second transistor, and

setting a second control signal for the second transistor based on the measured second shoot through current and a second reference trajectory current such that the second shoot through current of the second transistor follows the second reference trajectory current.

26. The method of any one of clauses 17 to 20 and 24, wherein the method further comprises setting a second control signal for the second transistor to turn the second transistor fully on.

27. The method of any of clauses 17 to 26, wherein the method comprises:

discharging of energy from the DC link capacitor by turning on at least a third transistor and a fourth transistor of the plurality of switches so as to cause a controlled shoot-through of a first inverter leg formed by the first transistor and the second transistor, and a second inverter leg formed by the third transistor and the fourth transistor,

wherein at least one of the third transistor and the fourth transistor are controlled by the discharge controller to operate in a linear region of operation.

28. A discharge controller for controlling discharge of energy from a DC link capacitor in an inverter system that comprises a plurality of transistors that are controllable to convert a DC voltage to an AC voltage, the discharge controller being configured:

turn on at least a first transistor and a second transistor of the plurality of switches to induce a controlled shoot-through so as to cause energy discharge from the DC link capacitor, at least one of the first transistor and the second transistor are controlled to operate in a linear region of operation.

29. The discharge controller of clause 28, further configured to:

measure a first voltage across the first transistor, and

set a first control signal for the first transistor based on the measured first voltage and a first reference trajectory voltage such that the first voltage across the first transistor follows the reference trajectory voltage.

30. The discharge controller of clause 29, wherein the first reference trajectory voltage is set based on a target discharge profile of the DC link capacitor.

31. The discharge controller of clause 30, wherein the first reference trajectory voltage is further based on a first temperature measurement associated with the first transistor.

32. The discharge controller of any of clauses 28 to 31, further configured to:

measure a second voltage across the second transistor, and

set a second control signal for the second transistor based on the measured second voltage and a second reference trajectory voltage such that the second voltage across the second transistor follows the reference trajectory voltage.

33. The discharge controller of clause 32, wherein the second reference trajectory voltage is set based on the target discharge profile of the DC link capacitor.

34. The discharge controller of clause 33, wherein the second reference trajectory voltage is further based on the second temperature measurement associated with the second transistor.

35. The discharge controller of clause 28, further configured to:

measure a first shoot through current through the first transistor, and

set a first control signal for the first transistor based on the measured first shoot through current and a first reference trajectory current such that the first shoot through current of the first transistor follows the first reference trajectory current.

36. The discharge controller of clause 35, further configured to:

measure a second shoot through current through the second transistor, and

set a second control signal for the second transistor based on the measured second shoot through current and a second reference trajectory current such that the second shoot through current of the second transistor follows the second reference trajectory current.

37. The discharge controller of any one of clauses 28 to 31 and 35, further configured to:
set a second control signal for the second transistor to turn the second transistor fully on.

38. The discharge controller of any of clauses 28 to 37, further configured to:

discharge energy from the DC link capacitor by turning on at least a third transistor and a fourth transistor of the plurality of switches so as to cause a controlled shoot-through of a first inverter leg formed by the first transistor and the second transistor, and a second inverter leg formed by the third transistor and the fourth transistor,
wherein at least one of the third transistor and the fourth transistor are controlled by the discharge controller to operate in a linear region of operation.

## Claims

1. An inverter system for connecting to a DC power source, the inverter system comprising:

a plurality of transistors that are controllable to convert a DC voltage to an AC voltage;
a DC link capacitor; and
a discharge controller configured to cause a discharge of energy from the DC link capacitor when the DC power source is disconnected from the inverter system,
wherein the discharge controller is configured to cause the discharge of energy from the DC link capacitor by turning on at least a first transistor and a second transistor of the plurality of transistors so as to cause a controlled shoot-through, and
wherein at least one of the fist transistor and the second transistor are controlled by the discharge controller to operate in a linear region of operation.

2. The inverter system of claim 1, wherein the discharge controller further comprises a first servo loop circuit for controlling the first transistor.

3. The inverter system of claim 2, wherein the first servo loop circuit further comprises:

a first voltage measurement circuit configured to measure a first voltage across the first transistor, and
wherein the first servo loop circuit is configured to set a first control signal for the first transistor based on the measured first voltage and a first reference trajectory voltage such that the first voltage across the first transistor follows the reference trajectory voltage.

4. The inverter system of claim 3, wherein the first reference trajectory voltage is set based on a target discharge profile of the DC link capacitor,
and optionally wherein the first reference trajectory voltage is further based on a first temperature measurement associated with the first transistor.

5. The inverter system of any of claims 2 to 4, further comprising:
a second servo loop circuit for controlling the second transistor.

6. The inverter system of claim 5, wherein the second servo loop circuit further comprises:

a second voltage measurement circuit configured to measure a second voltage across the second transistor, and
wherein the second servo loop circuit is configured to set a second control signal for the second transistor based on the measured second voltage and a second reference trajectory voltage such that the second voltage across the second transistor follows the reference trajectory voltage.

7. The inverter system of claim 6, wherein the second reference trajectory voltage is set based on the target discharge profile of the DC link capacitor,
and optionally wherein the second reference trajectory voltage is further based on the second temperature measurement associated with the second transistor.

8. The inverter system of claim 2, wherein the first servo loop circuit further comprises:

a first current measurement circuit configured to measure a first shoot through current through the first transistor, and
wherein the first servo loop circuit is configured to set a first control signal for the first transistor based on the measured first shoot through current and a first reference trajectory current such that the first shoot through current through the first transistor follows the first reference trajectory current.

9. The inverter system of claim 8, further comprising:

a second servo loop circuit for controlling the second transistor, and
wherein the second servo loop circuit comprises:

a second current measurement circuit configured to measure a second shoot through current through the second transistor, and

wherein the second servo loop circuit is configured to set a second control signal for the second transistor based on the measured second shoot through current and a second reference trajectory current such that the second shoot through current through the second transistor follows the second reference trajectory current.

10. The inverter system of any one of claims 1 to 4 and 8, wherein the discharge controller is configured to set a second control signal for the second transistor to turn the second transistor fully on.

11. The inverter system of any preceding claim, wherein the discharge controller is further configured to cause the discharge of energy from the DC link capacitor by turning on at least a third transistor and a fourth transistor of the plurality of switches so as to cause a controlled shoot-through of a first inverter leg formed by the first transistor and the second transistor, and a second inverter leg formed by the third transistor and the fourth transistor, wherein at least one of the third transistor and the fourth transistor are controlled by the discharge controller to operate in a linear region of operation.

12. An Electric Vehicle comprising an inverter system, wherein the inverter system comprises:

a plurality of transistors that are controllable to convert a DC voltage to an AC voltage;
a DC link capacitor; and
a discharge controller configured to cause a discharge of energy from the DC link capacitor when the DC power source is disconnected from the inverter system,
wherein the discharge controller is configured to cause the discharge of energy from the DC link capacitor by turning on at least a first transistor and a second transistor of the plurality of switches so as to cause a controlled shoot-through, and
wherein at least one of the fist transistor and the second transistor are controlled by the discharge controller to operate in a linear region of operation.

13. A discharge controller for controlling discharge of energy from a DC link capacitor in an inverter system that comprises a plurality of transistors that are controllable to convert a DC voltage to an AC voltage, the discharge controller being configured:

turn on at least a first transistor and a second transistor of the plurality of switches to induce a controlled shoot-through so as to cause energy discharge from the DC link capacitor, at least one of the first transistor and the second transistor are controlled to operate in a linear region of operation.

14. The discharge controller of claim 13, further configured to:

measure a first voltage across the first transistor, and
set a first control signal for the first transistor based on the measured first voltage and a first reference trajectory voltage such that the first voltage across the first transistor follows the reference trajectory voltage,
and optionally wherein the first reference trajectory voltage is set based on a target discharge profile of the DC link capacitor.

15. The discharge controller of claim 13 or claim 14, wherein at least one of the following applies:

(a) the discharge control is further configured to:

measure a second voltage across the second transistor, and
set a second control signal for the second transistor based on the measured second voltage and a second reference trajectory voltage such that the second voltage across the second transistor follows the reference trajectory voltage;.

(b) the discharge controller is further configured to:

discharge energy from the DC link capacitor by turning on at least a third transistor and a fourth transistor of the plurality of switches so as to cause a controlled shoot-through of a first inverter leg formed by the first transistor and the second transistor, and a second inverter leg formed by the third transistor and the fourth transistor, wherein at least one of the third transistor and the fourth transistor are controlled by the discharge controller to operate in a linear region of operation.

100

110 — HV Battery 400V to 900V

130

160
163 — R
165 — Discharge PWM Controller

150

121
122
123
124
125
126
127
128
129

120

140 — E Motor

FIG. 1

FIG. 2

FIG. 3

EP 4 492 664 A1

FIG. 4

FIG. 5

EP 4 492 664 A1

**FIG. 6**

FIG. 7

FIG. 8

FIG. 9

FIG. 10

FIG. 11

FIG. 12

EP 4 492 664 A1

**FIG. 13**

FIG. 14

FIG. 15

EP 4 492 664 A1

FIG. 16

FIG. 17

FIG. 18

FIG. 19

EP 4 492 664 A1

FIG. 20

FIG. 21

FIG. 22

FIG. 23

FIG. 24

FIG. 25

FIG. 26

FIG. 27

EP 4 492 664 A1

FIG. 28

FIG. 29

3010

Turning on at least a first transistor and a second transistor of an inverter system to induce a controlled shoot-through so as to cause energy discharge from the DC link capacitor, at least one of the first transistor and the second transistor are controlled to operate in a linear region of operation

3020

Measuring the first voltage across the first transistor

3030

Setting a first control signal for the first transistor based on the measured first voltage and a first reference trajectory voltage such that the first voltage across the first transistor follows the reference trajectory voltage

FIG. 30

FIG. 31

EP 4 492 664 A1

**EP 4 492 664 A1**

<table>
<tr><td colspan="2" align="center">Europäisches<br>Patentamt<br>European<br>Patent Office<br>Office européen<br>des brevets</td><td align="center">**EUROPEAN SEARCH REPORT**</td><td>**Application Number**<br><br>EP 24 16 5932</td></tr>
</table>

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2021 111773 A1 (AUDI AG [DE]) 10 November 2022 (2022-11-10) * paragraphs [0022] - [0036], [0042] - [0054]; figures 1-3 * | 1-15 | INV.<br>H02M1/32<br><br>ADD.<br>H02M7/5387 |
|  | ----- |  |  |

|  |  |
|---|---|
|  | TECHNICAL FIELDS SEARCHED (IPC) |
|  | H02M |

The present search report has been drawn up for all claims

| Place of search | Date of completion of the search | Examiner |
|---|---|---|
| The Hague | 29 August 2024 | Standaert, Frans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

2

**ANNEX TO THE EUROPEAN SEARCH REPORT
ON EUROPEAN PATENT APPLICATION NO.**

EP 24 16 5932

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2024

| Patent document cited in search report | Publication date | Patent family member(s) | Publication date |
|---|---|---|---|
| DE 102021111773 A1 | 10-11-2022 | NONE | |

For more details about this annex : see Official Journal of the European Patent Office, No. 12/82